(19) **Europäisches Patentamt / European Patent Office / Office européen des brevets**

(11) **EP 4 392 369 B1**

(12) **EUROPEAN PATENT SPECIFICATION**

(45) Date of publication and mention
of the grant of the patent:
**01.10.2025 Bulletin 2025/40**

(21) Application number: **22768824.9**

(22) Date of filing: **25.08.2022**

(51) International Patent Classification (IPC):
***C01B 21/26*** (2006.01)    ***B01D 53/56*** (2006.01)
***C01B 21/28*** (2006.01)    ***C01B 21/38*** (2006.01)

(52) Cooperative Patent Classification (CPC):
**C01B 21/26; B01D 53/56; C01B 21/28;**
**C01B 21/38;** Y02P 20/129

(86) International application number:
**PCT/EP2022/073639**

(87) International publication number:
**WO 2023/025869 (02.03.2023 Gazette 2023/09)**

(54) **DUAL PRESSURE SYSTEM FOR PRODUCING NITRIC ACID AND METHOD OF OPERATING THEREOF**

DOPPELDRUCKSYSTEM ZUR HERSTELLUNG VON SALPETERSÄURE UND VERFAHREN ZUM BETRIEB DAVON

SYSTÈME À DOUBLE PRESSION POUR LA PRODUCTION D'ACIDE NITRIQUE ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2021 EP 21193029**
**11.01.2022 EP 22150904**
**03.03.2022 EP 22160016**

(43) Date of publication of application:
**03.07.2024 Bulletin 2024/27**

(73) Proprietor: **Yara International ASA**
**0277 Oslo (NO)**

(72) Inventors:
• **VIGELAND, Bent**
**3714 Skien (NO)**
• **ØIEN, Halvor**
**3943 Porsgrunn (NO)**
• **BANASIAK, Krzysztof**
**7018 Trondheim (NO)**
• **DE SMET, Andre**
**4535 JH Terneuzen (NL)**
• **FAUCONNIER, Peter**
**1850 Grimbergen (BE)**

(74) Representative: **De Clercq & Partners**
**Edgard Gevaertdreef 10a**
**9830 Sint-Martens-Latem (BE)**

(56) References cited:
**DE-A1- 102013 004 341    US-B1- 6 264 910**

• **"Latest nitric acid process design", NITROGEN,, no. 165, 1 January 1987 (1987-01-01), pages 32 - 40, XP001266113**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field**

The present disclosure relates to the field of nitric acid production in a dual pressure plant.

**Introduction**

Pure nitric acid is a clear, colorless liquid with a strong odor. Nitric acid is produced in large quantities principally by catalytic oxidation of ammonia (Ostwald process). Ammonia is converted to nitric acid in several stages. Ammonia is first oxidized in an ammonia burner on platinum gauzes (commonly called ammonia converter) or cobalt balls, producing nitric oxide (in this disclosure also called nitrogen monoxide (NO)) and water:

$$4 \ NH_3 \ (g) + 5 \ O_2 \ (g) \rightarrow 4 \ NO \ (g) + 6 \ H_2O \ (g) \qquad (1)$$

The reaction product from (1), nitric oxide, following cooling, is then oxidized to nitrogen dioxide ($NO_2$) and further to dinitrogen tetroxide $N_2O_4$ (g) in an oxidation section:

$$2 \ NO \ (g) + O_2 \ (g) \rightarrow 2 \ NO_2 \ (g) \qquad (2)$$

$$2 \ NO_2 \ (g) \rightarrow N_2O_4 \ (g) \qquad (3)$$

Cooling of nitrogen oxide gases is accomplished first through the use of a waste heat recovery system recovering the heat from the conversion of ammonia into nitric oxide, then through the use of a cooler condenser in which condensed nitric acid is separated from nitric oxide, nitrogen dioxide and dinitrogen tetroxide and nitric acid gases, collectively called NOx gases, and finally by heating the tail gas released at the outlet of the absorption tower in which the $NO_x$ gases are absorbed.

By absorption in water, following compression through a $NO_x$ gas compressor, nitrogen dioxide and dinitrogen tetroxide are converted to nitric acid and nitric oxide:

$$3 \ NO_2 \ (g) + H_2O \ (I) \rightarrow 2 \ HNO_3(aq) + NO(g) \qquad (4)$$

$$3 \ N_2O_4 \ (g) + 2 \ H_2O \ (I) \rightarrow 4 \ HNO_3 \ (aq) + 2 \ NO \ (g) \qquad (5)$$

Weak nitric acid which is up to 68 % (azeotrope) is obtained. Through a rectification process the concentration of nitric acid can be increased up to 99 % concentrated nitric acid. The total reaction is given by the following formula:

$$NH_3 + 2 \ O_2 \rightarrow HNO_3 + H_2O \qquad (6)$$

The main process units in a nitric acid production plant, include an ammonia converter (conversion of ammonia into nitric oxides using oxygen over a suitable catalyst), an oxidation section (conversion of nitric oxide into nitrogen dioxide and nitrogen tetroxide), an absorber unit (for the absorption of $NO_x$ gases into water) and a bleacher unit (removal of unreacted dissolved gases, containing in particular $NO_x$ and gases, from the aqueous nitric acid solution, which give it its typical brownish color).

The process for the production of nitric acid can be differentiated into a mono pressure (single-pressure) and dual pressure (split-pressure) process.

In a dual pressure process, the absorber unit operates at a higher working pressure than the ammonia converter. Modern dual pressure processes feature a low-pressure ammonia converter operating typically at 2 to 6 bara, and a high-pressure absorber unit operating at 9 to 16 bara.

A dual pressure process requires an air compressor to feed low-pressure air (which comprises about 21 vol% of oxygen) to the converter, and a $NO_x$ gas compressor to feed high-pressure $NO_x$ gases to the absorber unit. The working pressure of an air compressor is from 2 to 6 bara, inclusive, and the working pressure of a $NO_x$ gas compressor is from 9 to 16 bara, inclusive.

The drive power for the air compressor typically originates from a tail gas turbine and a steam turbine or a power source such as an electric motor. Accordingly, the compressor train of a dual pressure nitric acid production plant typically comprises an air compressor, a $NO_x$ gas compressor, a tail gas turbine, and a steam turbine or a power source such as an electric motor.

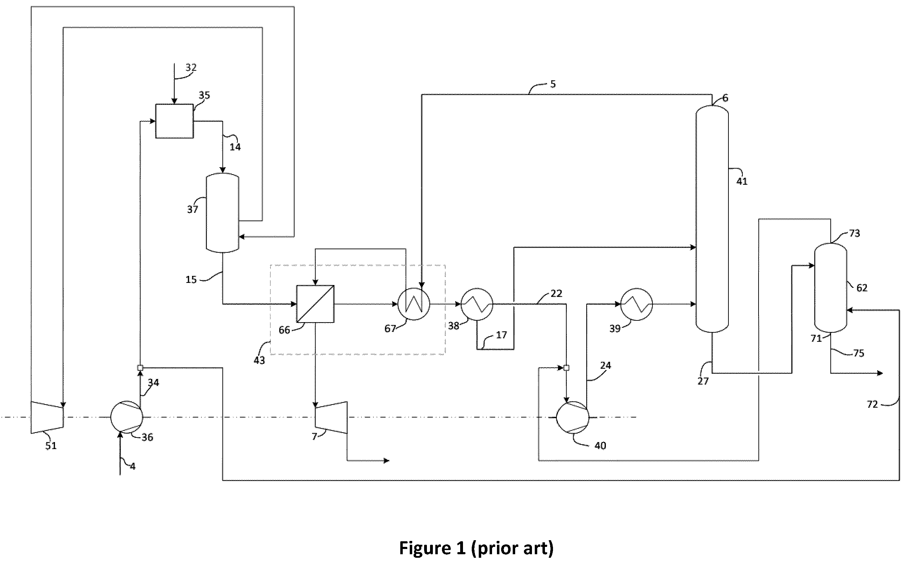

More in detail, referring to Figure 1, a dual pressure plant and process according to the prior art works as follows.

Gaseous ammonia **32,** optionally pre-heated in a pre-heater unit (not shown) is mixed with compressed air **34** pressurised to a low pressure using an air compressor **36,** in a mixing apparatus **35,** and the resulting ammonia/oxygen-enriched air mixture **14** is fed to an ammonia converter **37**, operating at a low pressure, where ammonia is oxidized over a suitable catalyst, thus obtaining a LP $NO_x$ gas/steam mixture **15,** comprising water and nitric oxide (NO). The heat of the mixture coming out of the ammonia converter is recovered, after which the $NO_x$ gas/stream mixture is subsequently cooled down in a gas cooler/condenser **38** to temperature where the water condenses, and an aqueous diluted nitric acid mixture **17** is separated from a gaseous $NO_x$ stream **22**. The gaseous $NO_x$ stream **22** is sent to a $NO_x$ gas compressor **40** wherein its pressure is elevated from a low pressure to a high pressure, being about equal to the operating pressure of an absorber unit **41**. The aqueous diluted nitric acid mixture **17** is sent to the absorber unit **41,** commonly called absorption tower. The pressurised $NO_x$ gas stream **24** is further oxidized to further convert the NO to $NO_2$ and $N_2O_4$, cooled in an additional gas cooler/condenser **39** and then directed to the absorption tower **41**. Inside the absorption tower **41,** the pressurised $NO_x$ gas stream **24** reacts with water to produce the tail gas **5** and a stream of raw nitric acid **27** also containing residual $NO_x$ gas, which is fed to a bleacher **62**. The residual $NO_x$ gas in the raw nitric acid stream **27** is then stripped out with a gaseous medium **72** such as an oxygen-containing gas or air, inside the bleacher unit **62** operating at low-pressure; the bleacher unit is generally operated at about the same pressure as the ammonia converter. The drive power for both the air compressor **36** and the $NO_x$ gas compressor **40** originates from a tail gas expander **7** and a steam turbine **51** or a power source such as an electric motor (not shown). The heat generated in the ammonia converter **37** is used for heating the tail gas **5** in the tail gas heat exchanger **43** comprising the heat exchangers **66** and **67,** the tail gas heater being therefore optionally present. The tail gas **5** exchanges heat with the $NO_x$ gas/steam mixture **15** in the heat exchange system **43** and is expanded in the tail gas expander **7**.

The air used for the oxidation of ammonia is commonly denoted as primary air; the air used as stripping medium in the bleacher unit is commonly denoted as secondary air.

According to the prior art, the revamping of the nitric acid production plants to increase its capacity is commonly based on increasing the amount of primary air to the reactor, which leads to a proportional increase of the amount of nitric acid produced.

The increase of the amount of primary air in the reactor entails the installation of a new air compressor or the revamping of the existing one. The increase of the primary air also causes a higher amount of gas to be processed subsequently into the $NO_x$ gas compressor. This entails the further revamping of the $NO_x$ gas compressor or the installation of a new one, and the modification or replacement of the tail gas and/or the steam-turbines and/or the electrical motor. Otherwise, the NOx gas compressor would easily achieve its process limit, thus becoming the bottleneck of the plant.

However, the revamping has significant drawbacks. First of all, it entails elevated costs for the modification or replacement of the existing equipment, i.e. the air compressor, the $NO_x$ gas compressor and the corresponding turbines and electrical motor. In addition, the revamping of the equipment is also technically demanding leading to long plant downtime.

Another problem related to nitric acid production plants is the high amount of energy required in order to operate the air compressor. Consequently, a high amount of energy is required to achieve the targeted nitric acid production throughput.

A goal of the present invention, therefore, is to provide a system and a method for operating the system which allows for the reduction or even suppression of power required to operate the air compressor in a dual nitric acid plant.

## Background Prior Art

In CN110540178A (China Chengda Engineering Co Ltd, 2019), a process for producing nitric acid is disclosed. Nitric acid is produced by a medium pressure method, which is characterized in that it comprises the following steps: the ammonia oxidation and absorption pressure is 0.5-0.6 MPa; enabling the tail gas leaving the absorption tower to pass through a carbon molecular sieve Temperature Swing Adsorption (TSA) treatment device to reduce the content of nitrogen oxides in the tail gas to be less than $100mg/Nm^3$; the process air of the air compressor is used as the regeneration desorption gas of the carbon molecular sieve temperature swing adsorption treatment device, and the regeneration desorption gas containing the nitrogen oxide can be returned to the ammonia oxidation reactor for reuse; adding a layer of $N_2O$ decomposition catalyst in the oxidation reactor to reduce the content of $N_2O$ to 50-100 PPM through reaction; the nitric acid bleaching tower is arranged at the bottom of the absorption tower, and the two towers are integrated, so that the process flow is shortened, and the equipment investment is reduced. With regard to the amount of air being compressed by the air compressor, however, the same amount of air is to be compressed as would be in the absence of the TSA unit: in the presence of the TSA unit, the amount of air being compressed is initially split between the TSA unit and the ammonia oxidation reactor directly and, in the end, with the amount of compressed air leaving the TSA unit being directed also to the ammonia oxidation reactor, the total amount of air compressed by the air compressor ends up in the ammonia oxidation reactor.

In WO2018/162150A1 (Casale SA, 13 September 2018) a solution is proposed to overcome the revamping drawbacks. WO2018162150A1 discloses a dual pressure plant for the production of nitric acid comprising a reactor providing a gaseous effluent containing nitrogen oxides, an absorber unit in which nitrogen oxides react with water providing raw nitric acid and, the absorber unit operating at a pressure greater than the pressure of the reactor, a compressor elevating the pressure of the reactor effluent to the absorber unit pressure, the plant also comprising a first HP bleacher unit and a second LP bleacher unit, the first HP bleacher unit stripping with air the $NO_x$ gas from the output stream of the absorber unit, thus providing a partially stripped nitric acid stream and a nitrogen oxides-loaded air stream, the former being fed to the second LP-bleacher unit and the latter being recycled to the oxidation section, upstream of the $NO_x$ gas compressor.

A further air compressor is also provided, which supplies the first HP bleacher unit with air. Hence, energy is required in order to operate a first HP bleacher unit at a high-pressure and then recycle $NO_x$ gases to the delivery side of the $NO_x$ gas compressor. Further production plants for the manufacture of nitric acid are known from DE102013004341A and US6264910B.

Therefore, there remains a need for a process and a corresponding plant setup for minimizing or even suppressing the amount of energy required in order to operate the $NO_x$ gas compressor and, in particular, also the air compressor, in order to avoid bottlenecks in the nitric acid production throughput associated with those compressors.

## Summary

In one aspect of the disclosure, a production plant for producing nitric acid at reduced power consumption and reduced emissions, comprising:

- an air compressor providing compressed air;
- a supply for a first oxygen-rich gas, such as a high-pressure water electrolyzer, in fluid communication with compressed air, the mixing of the first oxygen-rich gas and of compressed air providing part of a first oxygen-containing gas;
- a mixing apparatus, for mixing the first oxygen-containing gas with an ammonia gas stream, to produce an ammonia/oxygen-containing gas mixture;
- an ammonia converter operable at a pressure equal to or higher than P1 and lower than P2, for oxidising ammonia in the ammonia/oxygen-containing gas mixture, to produce a NOx gas/steam mixture comprising water and nitric oxide;
- a means for regulating the concentration of ammonia and/or of oxygen in the ammonia converter, particularly a means for controlling the flow of the first oxygen-rich gas in the oxygen-containing gas and/or a means for controlling the flow of the ammonia gas stream, for maintaining the oxygen to ammonia molar ratio inside the ammonia converter at a ratio of at least 1.2, in particular between 1.2 and 9;
- a first gas cooler/condenser downstream the ammonia converter, to produce an aqueous diluted nitric acid mixture and a gaseous $NO_x$ stream;
- a NOx gas compressor for compressing the gaseous NOx stream, to produce a compressed $NO_x$ gas stream at a pressure P2;
- an absorption tower for absorbing the $NO_x$ gases from the compressed $NO_x$ gas stream in water, to produce a stream of raw nitric acid-containing residual $NO_x$ gas and a tail gas comprising $NO_x$ gases, comprising an absorption tower tail gas outlet for evacuating the tail gas;
- a heat exchange system located upstream the gas cooler/condenser for heating a tail gas stream with the heat from the $NO_x$ gas/steam mixture coming from the ammonia converter;
- a second gas cooler/condenser for separating and condensing steam from the compressed $NO_x$ gas stream before the stream is provided to the absorption tower;
- a second oxygen-containing gas, having either:

    a) a pressure equal to or higher than P1 and up to P2, for supplying oxygen downstream the ammonia converter and upstream the $NO_x$ gas compressor; or
    b) a pressure higher than P2, for supplying oxygen to the compressed $NO_x$ gas stream;

- a means for controlling the flow of the second oxygen-containing gas such that a tail gas stream contains at least 0.5% by volume oxygen; and
- a first pressure release means located downstream the heat exchange system, for expanding a tail gas stream, to produce a first expanded tail gas at a pressure equal to or higher than P1 and lower than P2, wherein the first pressure release means can at least partly power the $NO_x$ gas compressor and/or the air compressor.

The production plant is characterised in that the production plant further comprises:

- a first and/or a second means for splitting a gas stream, wherein

  (i) the first means for splitting is a means for splitting a tail gas stream into a first tail gas stream and a second tail gas stream, wherein the first tail gas stream has a pressure equal to or higher than P1 and up to P2 and is in fluid communication with the first oxygen-rich gas and compressed air, and wherein the mixing of compressed air, the first oxygen-rich gas and the first tail gas stream provides the first oxygen-containing gas, and
  (ii) the second means for splitting is a means for splitting a tail gas stream into a third tail gas stream and a fourth tail gas stream, wherein the third tail gas stream has a pressure equal to or higher than P1 and up to P2 and is in fluid communication with compressed air and the first oxygen-rich gas, and wherein the mixing of the third tail gas, compressed air and the first oxygen-rich gas provides the second oxygen-containing gas, and wherein the second oxygen-containing gas is supplied downstream the ammonia converter and upstream the $NO_x$ gas compressor;
  or
  the second means for splitting is a means for splitting a tail gas stream into a third tail gas stream and a fourth gas stream, and wherein the third tail gas stream is in fluid communication with compressed air and the first oxygen-rich gas, and wherein the mixing of the third tail gas, compressed air and the first oxygen-rich gas and the pressurisation of the mixed third tail gas, compressed air and the first oxygen-rich gas in a means for pressurising provide the second oxygen-containing gas at a pressure higher than P2, and wherein the second oxygen-containing gas is supplied downstream the $NO_x$ gas compressor and upstream the absorption tower.

In one embodiment according to the production plant of the disclosure, the production plant further comprises a means for controlling the flow of the first and/or third tail gas stream.

The inventors have found that, instead of supplying primary and secondary air solely as compressed air provided by an air compressor, it is possible to recirculate the first tail gas stream and/or the third tail gas stream, provided by the first means for splitting and the second means for splitting, respectively. The oxygen-rich gas and the second oxygen-containing gas provide oxygen to the ammonia converter and to the absorption tower, respectively, such that, even at reduced amounts of compressed air provided by the air compressor, the concentration of oxygen in the ammonia converter and in the absorption tower is at least equal to that in a state-of-the-art dual pressure nitric acid plant.

Therefore, tail gas, particularly with controlled oxygen content, can be recirculated both as primary and secondary air. Consequently, less compressed air is to be supplied such that less air has to be compressed and the power demand on the air compressor is reduced. At the same time, the size of the air compressor and that of a conventional gas expander, in which the tail gas is expanded in a state-of-the-art mono pressure nitric acid plant, are reduced, such that the footprint of the plant is reduced. Furthermore, the $NO_x$ emissions leaving the production plant are also reduced. Consequently, the size of the treatment unit for treating those $NO_x$ emissions is reduced with respect to the size in the corresponding state-of-the art mono pressure nitric acid plant. Also, the separate supply of the pressurized oxygen or oxygen-rich gas ensures an optimal conversion of ammonia to nitric oxide.

In one embodiment according to the production plant of the disclosure, the production plant further comprises the production plant further comprises one or more of:

- a steam turbine, wherein the steam turbine can at least partly power the $NO_x$ gas compressor and/or the air compressor;
- a heat exchanger, for exchanging heat between the first expanded tail gas and a tail gas stream, particularly a colder tail gas stream, wherein the first expanded tail gas exits the heat exchanger at a temperature below 300 °C, wherein:

  - the first expanded tail gas having exchanged heat with the tail gas is further supplied to the first means for splitting, particularly the first expanded tail gas downstream the heat exchanger is in direct fluid communication with the first means for splitting; and/or
  - the tail gas at the outlet of the absorption tower is split into a third tail gas stream and a fourth tail gas stream, particularly the tail gas stream colder than the first expanded tail gas is split into a third tail gas stream and a fourth tail gas stream;

- a De-$NO_x$ treatment unit; and
- a second pressure release means for expanding the second tail gas stream to atmospheric pressure, to produce a second expanded tail gas.

In one embodiment according to the production plant of the disclosure, the production plant further comprises a bleacher for bleaching the stream of raw nitric acid-containing residual $NO_x$ gas, to provide a stream of bleached nitric acid, having an inlet in fluid communication with a high-pressure water electrolyser supplying an oxygen-rich bleaching gas, and an outlet for off-gases in fluid communication with any gas stream downstream the ammonia converter and upstream the $NO_x$ gas compressor if the bleacher operates at a pressure equal to or higher than P1 and up to equal to P2, or in fluid communication with any stream downstream the $NO_x$ gas compressor and upstream the absorption tower and upstream the absorption tower if the bleacher operates at a pressure higher than P2, such that the supply for the second oxygen-containing gas comes at least partly from the off-gases.

In one embodiment according to the production plant of the disclosure, the production plant further comprises a stream of a second oxygen-rich gas in direct fluid communication with any tail gas stream, particularly a stream of a pressurized oxygen-rich gas in direct fluid communication with any tail gas stream upstream the first pressure release means.

In one embodiment according to the production plant of the disclosure, the production plant further comprises the first oxygen-rich gas, the second oxygen-rich gas, the second oxygen-containing gas, the oxygen-rich bleaching gas and the off-gases are all at least partly provided by a high-pressure water electrolyser.

In one aspect of the disclosure, a method for producing nitric acid at reduced power consumption and reduced emissions, in a production plant according to the production plant of the disclosure, is disclosed. The method comprises the steps of:

a) compressing air in the air compressor, thereby providing compressed air;

b) supplying compressed air obtained in step a) to the mixing apparatus;

c) supplying the ammonia gas stream to the mixing apparatus, thereby producing the ammonia/oxygen-containing gas mixture;

d) oxidising ammonia in the ammonia/oxygen-containing gas mixture in the ammonia converter at a pressure equal to or higher than P1 and lower than P2, thereby producing the gaseous $NO_x$ gas/steam mixture comprising water and nitric oxide;

e) cooling the $NO_x$ gas in the gaseous $NO_x$ gas/steam mixture in the heat exchange system and in the gas/cooler condenser, thereby producing an aqueous diluted nitric acid mixture and the gaseous $NO_x$ stream;

f) compressing the gaseous $NO_x$ stream in the $NO_x$ gas compressor, thereby providing the pressurised $NO_x$ compressed gas stream having a pressure P2;

g) absorbing the pressurised gaseous $NO_x$ stream in the absorption tower, thereby providing the stream of raw nitric acid-containing residual $NO_x$ gas and the tail gas comprising $NO_x$ gases;

h) heating the tail gas in the heat exchange system, with the heat from the $NO_x$ gas/steam mixture coming from the ammonia converter, particularly to a temperature ranging from 150 to 650 °C;

i) cooling the compressed $NO_x$ gas stream in the additional gas cooler/condenser, in particular thereby providing the compressed $NO_x$ gas stream having a temperature ranging from 20 to 60 °C; and

j) expanding at least part of the tail gas obtained in step h) in the first pressure release means, thereby providing the first expanded tail gas.

The method is characterised in that it further comprises the steps of:

k) splitting a tail gas stream, particularly a stream of tail gas downstream the absorption tower, with the first means for splitting into the first tail gas stream and the second tail gas stream, and/or with the second means for splitting into the third tail gas stream and the fourth tail gas stream;

l) mixing the first tail gas stream with the first oxygen-rich gas and compressed air, thereby providing the first oxygen-containing gas, and/or mixing the third tail gas stream with compressed air and the first oxygen-rich gas, thereby providing the second oxygen-containing gas;

m) adjusting the flow of the first oxygen-rich gas being mixed in step l) or the flow of the ammonia gas stream, such as to maintain the oxygen to ammonia molar ratio inside the ammonia converter to a ratio of at least 1.2, in particular between 1.2 and 9;

n) supplying the first oxygen-containing gas to the mixing unit;

o) adjusting the flow of the second oxygen-containing gas such that a tail gas stream, particularly a tail gas stream downstream the absorption tower, contains at least 0.5% by volume oxygen; and

p) supplying the second oxygen-containing gas at a pressure equal to or higher than P1 and up to P2 downstream the ammonia converter and upstream the $NO_x$ gas compressor, or at a pressure higher than P2 downstream the $NO_x$ gas compressor and upstream the absorption tower.

In one embodiment according to the method of the disclosure, the method further comprises the step of:
q) adjusting the flow of the first and/or the third tail gas stream.

In one embodiment according to the method of the disclosure, the first tail gas stream is mixed in step l), and wherein the first expanded tail gas is split in step k), and wherein the method further comprises the steps of:

r) before step h), heating up, in the heat exchanger, the tail gas obtained in step g) with the first expanded tail gas obtained in step j), in particular, heating up, in the heat exchanger, the tail gas stream colder than the first expanded tail gas with the first expanded tail gas obtained in step j), thereby bringing the tail gas to be mixed in step l) to a temperature below 300 °C;

s) treating the tail gas obtained in the De-NO$_x$ treatment unit before step h) and after step r), particularly treating the tail gas stream heated from step r) in the de-NOx unit,;

t) expanding the second tail gas stream in the second pressure release means, thereby providing the second expanded tail gas; and

u) recovering at least part of the heat energy generated in the ammonia converter in the steam turbine.

In one embodiment according to the method of the disclosure, the third tail gas stream is mixed in step l), and wherein the tail gas obtained in step g) is split in step k) into a third tail gas stream and a fourth tail gas stream.

In one embodiment according to the method of the disclosure, the method further comprises the step of:

v) bleaching the stream of raw nitric acid-containing residual NO$_x$ gas obtained in step g) in the bleacher, thereby producing the stream of bleached nitric acid.

In one embodiment according to the method of the disclosure, the method further comprises the step of:

w) supplying the stream of the second oxygen-rich gas, particularly as a stream of a pressurized oxygen-rich gas, to a tail gas stream, particularly upstream the first pressure release means.

In one embodiment according to the method of the disclosure, the method further comprises the step of:

x) operating the high-pressure water electrolyser, thereby producing pressurized oxygen-gas; and

y) providing, from the oxygen produced by the water electrolyser in step x), at least part of the first oxygen-rich gas, the second oxygen-containing gas, the second oxygen-rich gas, the oxygen-rich bleaching gas and the oxygen-rich off-gases.

In one aspect of the disclosure, the use of the production plant of the disclosure for performing the method of the disclosure, is disclosed.

In one aspect of the disclosure, method for revamping an existing production plant for producing nitric acid, wherein the existing production plant comprises:

- an air compressor for providing a compressed air stream;
- a mixing apparatus, for mixing compressed air stream with an ammonia gas stream, to produce an ammonia/oxygen-containing gas mixture;
- an ammonia converter operable at a pressure equal to or higher than P1 and lower than P2, for oxidising ammonia in the ammonia/oxygen-containing gas mixture, to produce a NO$_x$ gas/steam mixture comprising water and nitric oxide;
- a first gas cooler/condenser, downstream the ammonia converter, to produce an aqueous diluted nitric acid mixture and a gaseous NO$_x$ stream;
- a NOx gas compressor for compressing the gaseous NOx stream, to produce a compressed NOx gas stream at a pressure P2;
- an absorption tower for absorbing the NO$_x$ gases from the compressed NO$_x$ gas stream in water, to produce a stream of raw nitric acid-containing residual NO$_x$ gas and a tail gas comprising NO$_x$ gases, comprising an absorption tower tail gas outlet for evacuating the tail gas;
- a heat exchange system for heating a tail gas stream with the heat from the NO$_x$ gas/steam mixture coming from the ammonia converter;
- a second gas cooler/condenser for separating and condensing steam from the compressed NO$_x$ gas stream before it is absorbed in the absorption tower; and
- first pressure release means for expanding a tail gas stream, to produce a first expanded tail gas at a pressure equal to or higher than P1 and lower than P2, wherein the first pressure release means can at least partly power the NO$_x$ gas compressor;

into a production plant according to the production plant of the disclosure, is disclosed. The revamping method comprises the steps of:

- introducing a supply for a first oxygen-rich gas, such as a high-pressure water electrolyzer, in fluid communication with compressed air;
- introducing a means for regulating the concentration of ammonia and/or of oxygen in the ammonia converter, particularly a means for controlling the flow of the first oxygen-rich gas in the oxygen-containing gas and/or a means for controlling the flow of the ammonia gas stream, for maintaining the oxygen to ammonia molar ratio inside the ammonia converter at a ratio of at least 1.2, in particular between 1.2 and 9;

- introducing a supply for a second oxygen-containing gas, having either:

    (a) a pressure equal to or higher than P1 and up to P2, for supplying oxygen upstream the $NO_x$ gas compressor; or
    (b) a pressure higher than P2, for supplying oxygen to the compressed $NO_x$ gas stream,

    such that a tail gas stream contains at least 0.5% by volume oxygen;

- introducing a first means for splitting and/or a second means for splitting a stream of tail gas downstream the absorption tower, wherein

    (i) the first means for splitting is a means for splitting a tail gas stream into a first tail gas stream and a second tail gas stream, and wherein the first tail gas stream has a pressure equal to or higher than P1 and up to P2 and is in fluid communication with the first oxygen-rich gas and compressed air, and wherein the mixing of compressed air, the first oxygen-rich gas and the first tail gas stream provides the first oxygen-containing gas, and
    (ii) the second means for splitting is a means for splitting a tail gas stream into a third tail gas stream and a fourth tail gas stream, wherein the third tail gas stream has a pressure equal to or higher than P1 and up to P2 and is in fluid communication with compressed air and the first oxygen-rich gas, and wherein the mixing of the third tail gas, compressed air and the first oxygen-rich gas provides the second oxygen-containing gas, and wherein the second oxygen-containing gas is supplied downstream the ammonia converter and upstream the $NO_x$ gas compressor;
    or
    the second means for splitting is a means for splitting a tail gas stream into a third tail gas stream and a fourth gas stream, and wherein the third tail gas stream is in fluid communication with compressed air and the first oxygen-rich gas, and wherein the mixing of the third tail gas, compressed air and the first oxygen-rich gas and the pressurisation of the mixed third tail gas, compressed air and the first oxygen-rich gas in a means for pressurising provide the second oxygen-containing gas at a pressure higher than P2, and wherein the second oxygen-containing gas is supplied downstream the $NO_x$ gas compressor and upstream the absorption tower.

## List of Figures

Figure 1: Nitric acid plant according to the prior art comprising an ammonia converter (37) operating at a pressure equal to or higher than P1 and lower than the operating pressure (P2) of the absorption tower (41)

Figure 2A: Nitric acid plant according to the disclosure comprising an oxygen-containing gas (**67**) at a pressure equal to or higher than the operating pressure than the ammonia converter (**37**) and lower than the operating temperature of the absorption tower (**41**)

**Figure 2B:** Nitric acid plant according to the disclosure comprising an oxygen-containing gas (**67**) at a pressure higher than the operating temperature of the absorption tower (**41**)

**Figure 3A:** Nitric acid plant according to the disclosure comprising a bleacher (**62**) operating at a pressure equal to or higher than the operating pressure than the ammonia converter (**37**) and lower than the operating temperature of the absorption tower (**41**)

**Figure 3b:** Nitric acid plant according to the disclosure comprising a bleacher (**62**) operating at a pressure equal to higher than the operating temperature of the absorption tower (**41**)

## Table of numerals

| 4 | air |
|---|---|
| 5 | tail gas |
| 6 | outlet of nitric acid absorption tower |
| 7 | First pressure release means |
| 10 | first tail gas stream |
| 14 | ammonia/oxygen-containing gas mixture |
| 15 | $NO_x$ gas/steam mixture |

(continued)

| | |
|---|---|
| 17 | aqueous diluted nitric acid mixture |
| 18, 22 | gaseous $NO_x$ stream |
| 24 | compressed $NO_x$ gas having a pressure P2 |
| 27 | stream of raw nitric acid-containing residual $NO_x$ gas |
| 32 | ammonia |
| 34 | compressed air |
| 35 | mixing apparatus |
| 36 | air compressor |
| 37 | ammonia converter operable at a pressure equal to or higher than P1 and lower than P2 |
| 38 | gas cooler/condenser |
| 39 | additional gas cooler/condenser |
| 40 | $NO_x$ gas compressor |
| 41 | absorption tower |
| 43 | heat exchange system |
| 50 | first oxygen-rich gas |
| 51 | steam turbine |
| 55 | first means for splitting a tail gas stream |
| 56 | first oxygen-containing gas |
| 60 | second pressure release means |
| 62 | bleacher |
| 63 | high-pressure water electrolyser |
| 64 | expanded tail gas |
| 66 | first heat exchanger of the heat exchange system **43** |
| 67 | second heat exchanger of the heat exchange system **43** |
| 68 | second oxygen-containing gas having a pressure equal to or higher than P1 and up to P2, or a pressure higher than P2 |
| 69 | second expanded tail gas |
| 70 | De-$NO_x$ treatment unit |
| 71 | outlet for bleached nitric acid |
| 72 | oxygen-rich bleaching gas |
| 73 | outlet of the bleacher |
| 74 | stream of a second oxygen-rich gas |
| 75 | bleached nitric acid |
| 77 | off gases from the outlet **73** of the bleacher **62** |
| 78 | means for pressurising |
| 79 | heat exchanger |
| 80 | second tail gas stream |
| 81 | inlet of the bleacher **62** for the oxygen-rich bleaching gas **72** |
| 82 | second means for splitting a tail gas stream |
| 83 | third tail gas stream having a pressure equal to or higher than P1 and lower than P2 |
| 84 | third tail gas stream having a pressure higher than P2 |

(continued)

| 85 | fourth tail gas stream |
|---|---|

## Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

Where the term "about" when applied to a particular value or to a range, the value or range is interpreted as being as accurate as the method used to measure it.

The present disclosure generally relates to a system and method for the production of nitric acid, particularly in a dual pressure production plant, with important gains compared to conventional systems and methods, wherein the conventional primary air and/or secondary air consisting of pressurized air is partially replaced by the combination of (i) oxygen gas or an oxygen-rich gas, in particular a pressurized oxygen gas or oxygen-rich gas, such as produced by a high-pressure water electrolyser as further discussed herein; and (ii) a recirculated tail gas stream. Stated differently, in the system and methods for the production of nitric acid according to the present disclosure:

(i) oxygen gas or an oxygen-rich gas, in particular a pressurized oxygen gas or oxygen-rich gas, such as produced by a high-pressure water electrolyser, is used mixed with the compressed air and, in particular, with part of the tail gas stream, to provide a first oxygen-containing gas stream, which is mixed with an ammonia gas stream and subsequently provided to the ammonia converter, and (b) is used to provide a second oxygen-containing gas stream downstream of the ammonia convertor, such as a second oxygen-containing gas stream which is mixed with a NOx containing gas stream downstream of the ammonia convertor, such as in an oxidation section and/or upstream of the absorber, and/or which is used as a stripping gas in a bleacher, wherein, in particular, the oxygen containing bleacher off-gases are subsequently mixed with a NOx containing gas stream downstream of the ammonia convertor and upstream of the absorber; and

(ii) the tail gas exiting the absorber is split in a first tail gas stream and a second tail gas stream and/or a third and a fourth tail gas stream, wherein the first tail gas stream is mixed with the oxygen gas or the oxygen-rich gas, in particular the pressurized oxygen gas or oxygen-rich gas, such as produced by a high-pressure water electrolyser, and with the pressurized air, to provide the first oxygen-containing gas stream; and/or wherein part of the tail gas exiting the absorber, in particular the third tail gas stream, may also be mixed with the oxygen gas or oxygen-rich gas, in particular the pressurized oxygen gas or oxygen-rich gas, such as produced by a high-pressure water electrolyser, to provide the second oxygen-containing gas stream.

## *Dual pressure production plant for producing nitric acid*

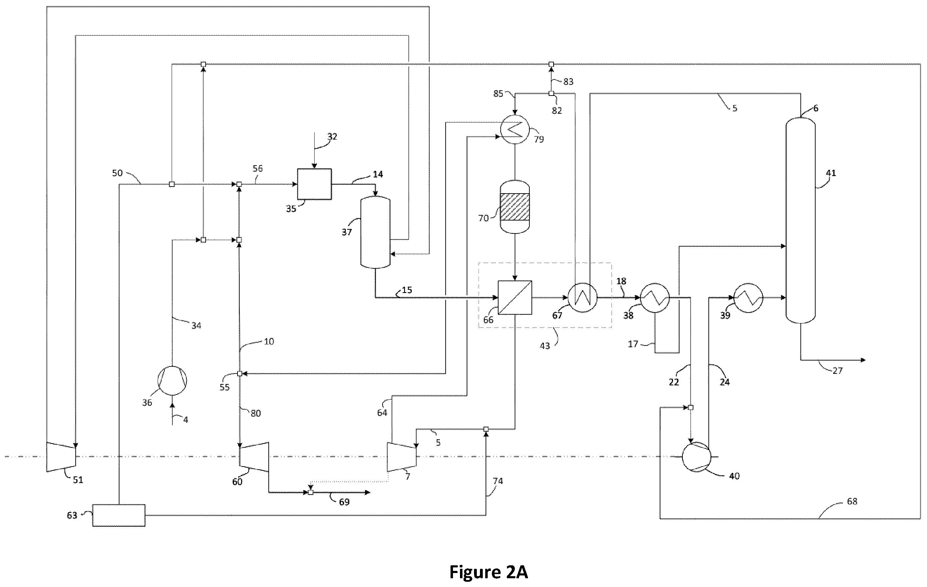

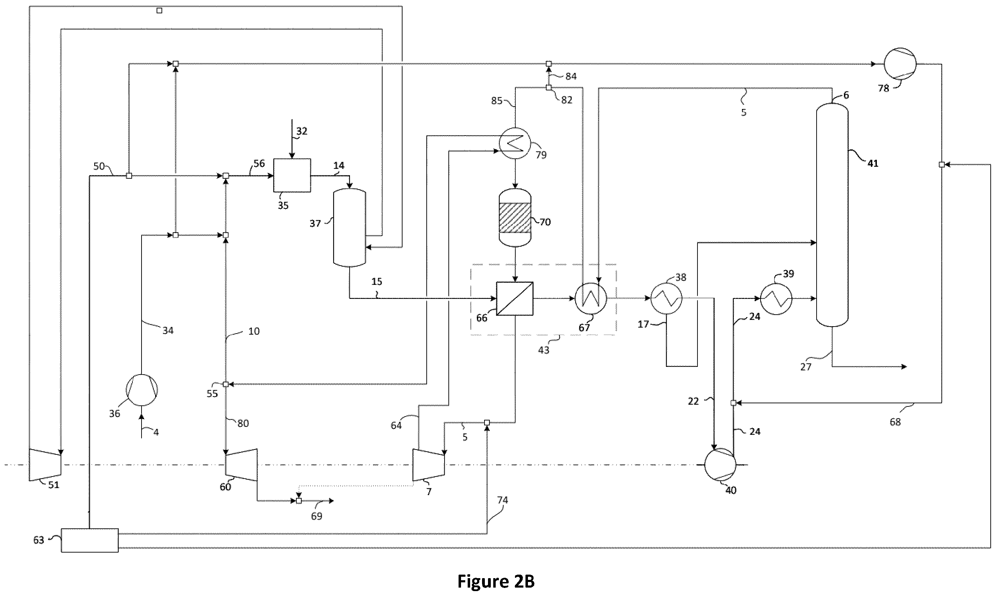

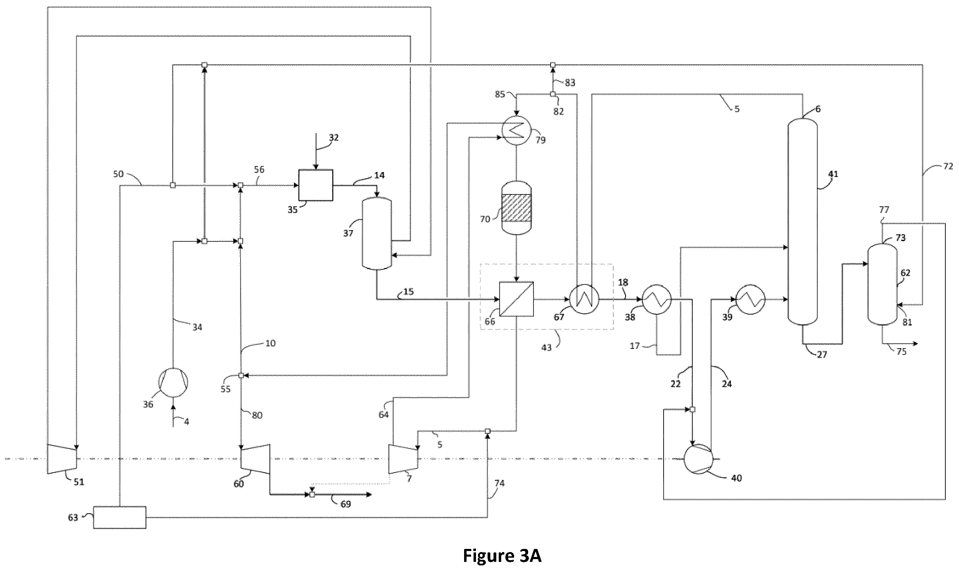

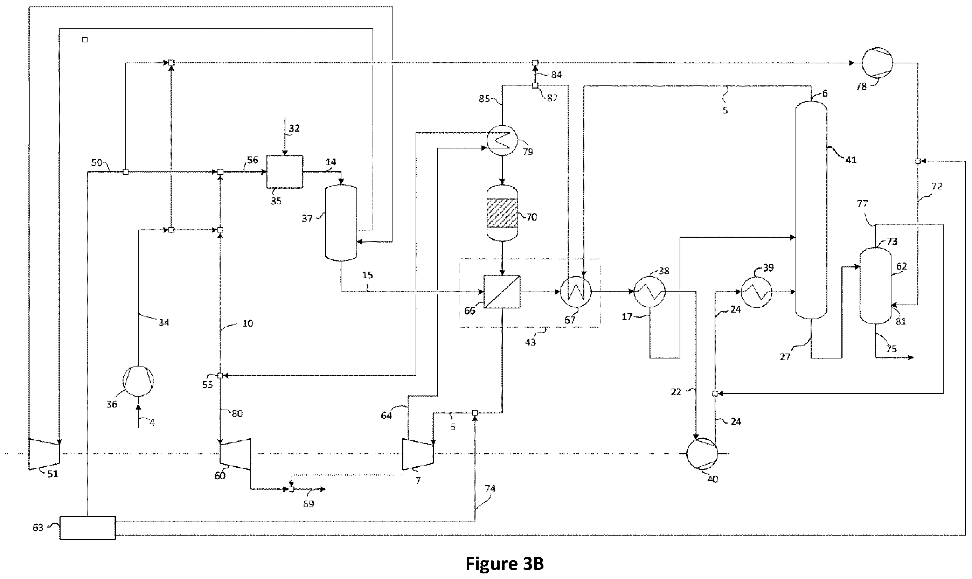

Reference is made to Figures 2A, 2B, 3A and 3B.

In one aspect of the disclosure, a production plant for producing nitric acid at reduced power consumption and reduced emissions, comprising an air compressor **36** providing compressed air **34**; a supply for a first oxygen-rich gas **50** in fluid communication with compressed air **34**, the mixing of the first oxygen-rich gas **50** and of compressed air **34** providing part of a first oxygen-containing gas **56**; a mixing apparatus **35,** for mixing the first oxygen-containing gas **56** with an ammonia gas stream **32,** to produce an ammonia/oxygen-containing gas mixture **14**; an ammonia converter **37** operable at a pressure equal to or higher than P1 and lower than P2, for oxidising ammonia in the ammonia/oxygen-containing gas mixture **14,** to produce a $NO_x$ gas/steam mixture **15** comprising water and nitric oxide; a means for regulating (not shown) the concentration of ammonia and/or of oxygen in the ammonia converter **37,** particularly a means for controlling the flow of the first oxygen-rich gas **50** in the oxygen-containing gas **56** and/or a means for controlling the flow of the ammonia gas stream **32,** for maintaining the oxygen to ammonia molar ratio inside the ammonia converter **37** at a ratio of at least 1.2, in particular between 1.2 and 9; a first gas cooler/condenser **38** downstream the ammonia converter **37,** to produce an aqueous diluted nitric acid mixture **17** and a gaseous $NO_x$ stream **22**; a $NO_x$ gas compressor **40** for compressing the gaseous $NO_x$ stream **22,** to produce a compressed $NO_x$ gas stream **24** at a pressure P2; an absorption tower **41** for absorbing the $NO_x$ gases from the compressed $NO_x$ gas stream **24** in water, to produce a stream of raw nitric acid-containing residual $NO_x$ gas **27** and a tail gas **5** comprising $NO_x$ gases, comprising an absorption tower tail gas outlet **6** for evacuating the tail gas **5;** a heat exchange system **43** located upstream the gas cooler/condenser **38** for heating a tail gas stream with the heat from the $NO_x$ gas/steam mixture **15** coming from the ammonia converter **37**; a second gas cooler/condenser **39** for separating and condensing steam from the compressed $NO_x$ gas stream **24** before the stream is provided to the absorption tower **41**; a second oxygen-containing gas **68, 72,77,** having either a) a pressure equal to or higher than P1 and up to P2, for supplying oxygen downstream the ammonia converter **37** and upstream the $NO_x$ gas compressor **40** (Figures 2A and 3A) or b) a pressure higher than P2, for supplying oxygen to the compressed $NO_x$ gas stream **24** (Figures 2B and 3B); a means for controlling the flow of the second oxygen-containing gas **68, 72, 77** such that a tail gas stream **5, 10, 64, 69, 80, 83, 84, 85** contains at least 0.5% by volume oxygen; and a first pressure release means **7** located downstream the heat exchange system **43,** for expanding a tail gas stream, to produce a first expanded tail gas **64** at a pressure equal to or higher than P1 and lower than P2, wherein the first pressure release means 7 can at least partly power the $NO_x$ gas compressor **40.**

The production plant is characterised in that the production plant further comprises a first and/or a second means for splitting **55, 82** a gas stream, wherein (i) the first means for splitting **55** is a means for splitting a tail gas stream into a first tail gas stream **10** and a second tail gas stream **80,** wherein the first tail gas stream **10** has a pressure equal to or higher than P1 and up to P2 and is in fluid communication with the first oxygen-rich gas **50** and compressed air **34,** and wherein the mixing of compressed air **34,** the first oxygen-rich gas **50** and the first tail gas stream **10** provides the first oxygen-containing gas **56,** and (ii) the second means for splitting **82** is a means for splitting a tail gas stream into a third tail gas stream **83** and a fourth tail gas stream **85,** wherein the third tail gas stream **83** has a pressure equal to or higher than P1 and up to P2 and is in fluid communication with compressed air **34** and the first oxygen-rich gas **50,** and wherein the mixing of the third tail gas **83,** compressed air **34** and the first oxygen-rich gas **50** provides the second oxygen-containing gas **68, 72, 77,** and wherein the second oxygen-containing gas **68, 72, 77** is supplied downstream the ammonia converter **37** and upstream the $NO_x$ gas compressor **40,** or the second means for splitting **82** is a means for splitting a tail gas stream into a third tail gas stream **84** and a fourth gas stream **85,** and wherein the third tail gas stream **84** is in fluid communication with compressed air **34** and the first oxygen-rich gas **50,** and wherein the mixing of the third tail gas **83,** compressed air **34** and the first oxygen-rich gas **50** and the pressurisation of the mixed third tail gas **83,** compressed air **34** and the first oxygen-rich gas **50** in a means for pressurising **78** provide the second oxygen-containing gas **68, 72, 77** at a pressure higher than P2, and wherein the second oxygen-containing gas **68, 72, 77** is supplied downstream the $NO_x$ gas compressor **40** and upstream the absorption tower **41.**

As defined herein, an oxygen-rich gas is a gas comprising more than 21 vol% of oxygen, more in particular more than 30 vol%, more than 35 vol%, more than 40 vol%, more than 50 vol%, more than 60 vol%, more than 70 vol%, more than 80 vol%, more than 90 vol%, more than 95 vol%, more than 98 vol% and more than 99 vol%, more in particular 100 vol% of oxygen. An oxygen-rich gas can, for example, be provided by an air separation unit or by a water electrolyser.

As defined herein, an air compressor is capable of providing at least 300000 m$^3$/h of compressed air.

As defined herein, steam is water vapours. As defined herein, the term flow refers to either a volumetric flow or a mass flow.

Typically, the heat exchange system **43** comprises at least two heat exchangers **66, 67.** The person skilled in the art will realise that it is possible to split tail gas stream inside the heat exchange system, for example between the heat exchanger **66** and **67.** In particular, the production plant comprises further heat exchange systems, such that the gaseous $NO_x$ stream **22** or the $NO_x$ compressed gas stream **24** exchange heat with the tail gas **5.**

As defined herein, a tail gas stream is any gas stream provided downstream the absorption tower, between the absorption tower **41** and the communication between the first tail gas stream **52** and the first oxygen-rich gas **50.**

As defined herein, a means for splitting is any means suitable for splitting a tail gas stream such as to generate e.g. a first tail gas stream **10** and a second sail gas stream **80,** or a third tail gas stream **83,84** and a fourth tail gas stream **85.** In particular, the means for splitting is a T-connection having one inlet and two outlets, such that a gas flowing through the inlet of the T-connection is splitted into two gas streams of identical chemical composition.

As defined herein, pressure release means is any suitable means for reducing the pressure of a gas stream. In particular, the pressure release means is a gas expander or a gas ejector. The gas ejector provides the benefits of a simplified equipment, at the same time as the pressure of the tail gas stream being processed through the ejector is reduced. This tail gas stream being processed through the gas ejector is the motive gas and the second gas fed to the ejector can, for example, be ambient air at a pressure lower than the tail gas stream being processed through the gas ejector, for example atmospheric pressure. In particular, the tail gas stream is fed as the motive gas to the ejector and the second gas fed to the ejector is oxygen at a pressure lower than the tail gas stream being processed through the gas ejector. Both the feeding of air or oxygen through the gas ejector contribute to increasing the concentration in the first tail gas stream **10** and/or the third tail gas stream **83, 84** being recycled, thereby reducing the demand on the first oxygen-rich gas **50**. In particular, the tail gas stream is fed as the motive gas to the ejector and the second gas fed to the ejector is the $NO_x$ gas/steam mixture **15** or the gaseous $NO_x$ stream **22**.

The person skilled in the art will realise that the means for splitting can be incorporated inside the pressure release means, provided that the pressure release means includes at least two outlets for the gas stream being depressurised.

As defined herein, a means for regulating the concentration of ammonia and/or of oxygen is any means for suitable for achieving a target concentration of ammonia and/or of oxygen. In particular, such means are gas flow control means, in particular a flow control valve or an orifice or a guide vane, for controlling the flow of the first oxygen-rich gas **50** and/or of the ammonia gas stream **32**. In particular, the means is an integrated process control system, in which the concentration of oxygen is measured and the target flow of oxygen is thereby determined and achieved from controlling the flow of the first oxygen-rich gas **50**. The oxygen concentration can also be determined from computing, by using the oxygen concentration of the first oxygen-rich gas **50,** the flow at which the first oxygen-rich gas **50** and of the ammonia gas stream **32** are introduced in the system, and the relative flow values at which the first oxygen-rich gas **50** and the ammonia gas stream **32** are mixed.

Typically, P1 ranges from 2 to 6 bara and P2 ranges from 9 to 16 bara. The person skilled in the art will determine the optimal concentrations of oxygen in the gases entering the ammonia converter **37** and the absorption tower **41,** in order for the catalytic conversion of ammonia to nitric oxide to proceed optimally in the ammonia converter **37** and for the absorption of $NO_x$ gases in the absorption tower **41** to proceed optimally. The person skilled in the art will also weigh out the benefits of increasing the oxygen content in the absorption tower **41,** namely a reduced tower size due to improved absorption, against the drawback of a higher gas volume downstream the absorption tower **41,** which implies equipment, such as heat exchangers, of a larger size, for heating tail gas.

The inventors have found that, instead of supplying primary and secondary air solely as compressed air **34** provided by an air compressor **36,** it is possible to recirculate the first tail gas stream **10** and/or the third tail gas stream **83, 84,** provided by the first means for splitting **55** and the second means for splitting **82,** respectively, particularly when controlling the oxygen content of the recirculated tail gas stream. The first oxygen-rich gas **50** having a pressure P1 and the second oxygen-containing gas **68** respectively provide oxygen to the ammonia converter **37** and to the absorption tower **41,** such that, even at reduced amounts of compressed air **34** air provided by the air compressor **36,** the concentration of oxygen in the ammonia converter **37** and in the absorption tower **41** is at least equal to that in a state-of-the-art dual pressure nitric acid plant. The separate supply of high pressure oxygen or oxygen-rich gas thus ensures that the oxygen and ammonia concentrations in the ammonia converter allow for the production of nitric acid of a commercial grade. The person skilled in the art will realise that, if the pressure of the first oxygen-rich gas **50** is at a pressure such that the pressure of the first oxygen-containing gas **56** is, the relevant pressure drop being accounted for, lower than the operating pressure of the ammonia converter **37,** the first oxygen-rich gas **50** can be compressed through the air compressor **36**. The fluid communication between compressed air and the first oxygen-rich gas **50** is then introduced inside the air compressor **36**.

Therefore, tail gas can be recirculated both as primary and secondary air. Consequently, less compressed air **34** is to be supplied such that less air has to be compressed and the power demand on the air compressor **34** is reduced. At the same time, the size of the air compressor **36** and that of a conventional second pressure release means **60,** in which the tail gas **5** is expanded in a state-of-the-art dual pressure nitric acid plant, are reduced, such that the footprint of the plant is reduced. Furthermore, the $NO_x$ emissions leaving the production plant are also reduced. Consequently, the size of the treatment unit for treating those $NO_x$ emissions is reduced with respect to the size in the corresponding state-of-the art dual pressure nitric acid plant.

In one embodiment according to the production plant of the disclosure, the production plant further comprises a means for controlling the flow of the first and/or third tail gas stream **10, 83, 84**.

The control of the flow of the first tail gas **10** enables to retain further control on the pressure and temperature inside the ammonia converter **37**. Similarly, control of the flow of the third tail gas **83, 84** enables to retain further control on the pressure and temperature inside the absorption tower **41**.

In one embodiment according to the production plant of the disclosure, the production plant further comprises one or more of a steam turbine 51, wherein the steam turbine can at least partly power the air compressor and/or $NO_x$ gas compressor **40**; a heat exchanger **79,** for exchanging heat between the first expanded tail gas **64** and a tail gas stream **5,** particularly a tail gas stream colder than the first expanded tail gas, wherein the first expanded tail gas **64** exits the heat exchanger **79** at a temperature below 300 °C, and wherein the first expanded tail gas **64** having exchanged heat with the tail gas 5 is further supplied to the first means for splitting **55,** in particular wherein the first expanded tail gas **64** downstream the heat exchanger **79** is in direct fluid communication with the first means for splitting **55,** and/or the tail gas **5** at the outlet **6** of the absorption tower **41,** in particular the tail gas stream colder than the first expanded tail gas, is splitted into a third tail gas stream **83, 84** and a fourth tail gas stream **85**; a De-NO$_x$ treatment unit **70**; and a second pressure release means **60** for expanding the second tail gas stream **80** to atmospheric pressure, to produce a second expanded tail gas **69**.

As defined herein, means for converting steam into power are any mean for achieving power from steam. In particular those means are a steam turbine connected to an electric generator.

Advantageously, the first means for splitting **55** and/or the second means for splitting **82** is located downstream the heat exchange system **43**. Indeed, both the first tail gas stream **10** and the second tail gas stream **80** are then at an optimal temperature. This means that the first tail gas stream **10** is at a temperature below 300 °C, such that the first tail gas stream **10** can be fed to the ammonia converter **37** without the amount of ammonia fed through the stream **32** having to be adjusted, in order to maintain the temperature at which the ammonia converter **37** is operable. Typically, the ammonia converter is operated at a temperature ranging from 800 to 950 °C. In addition, the location of the first means for splitting **55** downstream the heat exchange system **43** confers to the second tail gas stream **80** an optimal temperature for being expanded such as to provide an optimum of energy which can be used to power, at least partly, the air compressor **36** or the NO$_x$ gas compressor **40**.

Further, the presence of a steam turbine **51** allows for the recovery of the heat of the steam produced in the ammonia converter **37** and this recovered heat can be used, at least partly, for powering the air compressor **36** or the NO$_x$ gas compressor **40**.

In particular, the tail gas **5** exiting the outlet **6** of the absorption tower **41** is heated in the heat exchanger **73,** in particular first in a heat exchanger **67** of the heat exchange system **43** and then in the heat exchanger **73,** from an initial temperature ranging from 20 to 250 °C, to a temperature ranging from 100 to 450 °C. Subsequently, the tail gas exiting the heat exchanger **73** is heated in the heat exchange system **43,** particularly in a heat exchanger **66,** of the heat exchange system **43,** to a temperature ranging from 200 to 550 °C. The tail gas exiting the heat exchanger **73** then is at an optimal temperature for being treated in the De-NO$_x$ treatment unit **70** and, therefore, the De-NO$_x$ treatment unit **70** is located between the heat exchanger **73** and the tail gas heater **43.** The person skilled in the art will, without any difficulty, select the proper location for the De-NO$_x$ treatment unit **70** such that the operating temperature of the De-NO$_x$ treatment unit **70** is in agreement with the temperature of the corresponding tail gas stream. In the presence of a De-NO$_x$ treatment unit **70,** the NO$_x$ emissions leaving the production plant through the second tail gas stream **69,80** are reduced.

In particular, part of the tail gas **5,** that is the second tail gas stream **83, 84** provided by the second means for splitting **82,** can be recirculated downstream the ammonia converter **37** and upstream the NO$_x$ gas compressor **40** in the case of the third tail gas stream **83** has a pressure equal to or higher than P1 and lower than P2, or downstream the NO$_x$ gas compressor **40** and upstream the absorption tower **41** in the case of the third tail gas stream **84** has a pressure higher than P2, which reduces the duty on secondary air to be provided by the air compressor **36**.

In one embodiment according to the production plant of the disclosure, the production plant further comprises a bleacher **62** for bleaching the stream of raw nitric acid-containing residual NO$_x$ gas **27,** to provide a stream of bleached nitric acid **75** via outlet **71,** the bleacher having a gas inlet **81** in fluid communication with a high-pressure water electrolyser **63** supplying an oxygen-rich bleaching gas **72,** and a gas outlet **73** for off-gases **77** in fluid communication with any gas stream downstream the ammonia converter **37** and upstream the NO$_x$ gas compressor **40** if the bleacher **62** operates at a pressure equal to or higher than P1 and up to equal to P2 (Figure 3A), or in fluid communication with any stream downstream the NO$_x$ gas compressor **40** and upstream the absorption tower **41** if the bleacher **62** operates at a pressure higher than P2 (Figure 3B), such that the supply for the second oxygen-containing gas **68** comes at least partly from the off-gases **72, 77**.

In one embodiment according to the production plant of the disclosure, the oxygen-rich gas **50,** the second oxygen-containing gas **68, 72, 77,** the oxygen-rich bleaching gas **72** and the oxygen-rich off-gases **77** are provided at least partly by a high-pressure water electrolyser **63**. Stated differently, in particular embodiments, the system of the present disclosure comprises a high-pressure water electrolyser, wherein the high-pressure water electrolyser, in particular its anode, is in fluid communication with the compressed air stream, to provide an oxygen-rich gas/compressed air stream mixture.

A water electrolyser is a device for the electrolysis of water, being the decomposition of water into oxygen and hydrogen gas, due to the passage of an electric current therethrough. This technique can be used to make hydrogen gas, a main component of hydrogen fuel, and oxygen gas. A suitable high-pressure water electrolyser may comprise an anode producing oxygen gas according to the reaction

$$2\ OH\text{-} = H_2O + \tfrac{1}{2}\ O_2 + 2\ e\text{-};$$

a cathode, producing hydrogen gas according to the reaction

$$2\ H_2O + 2\ e\text{-} = H_2 + 2\ OH\text{-}\ ;$$

an electrolyte consisting of an alkaline solution such as potassium hydroxide; and a porous diaphragm separating the anode and the cathode, in order to avoid the mixing of hydrogen gas and oxygen gas that together form an explosive mixture. Alternatively, the anode and the cathode may be separated by a solid polymer electrolyte such as the fluoropolymer Nafion, where the electrolyte provides the selective transport of protons from the anode to the cathode, as well as the electrical insulation between the anode and the cathode, and avoids the mixing of hydrogen gas and oxygen gas that together form an explosive mixture.

The anode and cathode can be made of nickel or steel, or mixtures thereof. Alternatively, for the purpose of enhancing the electrode reactions, the anode and cathode may contain catalysts that can be made of Iridium and Platinum, respectively. The diaphragm of an electrically insulating material is based on, for example, zirconia. The diaphragm has a porosity such that it forms a barrier against transport of hydrogen and oxygen gas bubbles, while containing a continuum of penetrated liquid electrolyte. An anode-diaphragm-cathode assembly constitutes an electrolysis cell. Electrolysis cells are piled in series in stacks that compose the core of an electrolyser. The hydrogen and oxygen production for a given stack volume is proportional to the current density and inversely proportional to the stacking distance. Regardless of stack volume, the hydrogen and oxygen production is proportional to the total current. In addition to the stack, the electrolyser comprises auxiliaries such as a current rectifier, a water demineralization unit, a water pump and a cooling system, a hydrogen purification unit, and instrumentation.

The electrolyser is operated by applying a voltage corresponding to the state-of-the-art potential plus the overpotential over each cell. The total voltage depends on the total number of cells of which the electrolyser is comprised. OH- ions generated at the cathode migrate through the electrolyte in the diaphragm to the anode, where they are consumed by the anode reaction. Electrons travel the opposite direction in an external circuit. A high-pressure water electrolyser is operated at a pressure higher than P1, or at a pressure higher than P2, in particular higher than 2 bara, in particular as a high pressure water electrolyser at a high pressure of 9 to 30 bara, more in particular 15 to 30 bara and may be operated at a temperature of 50 to 80 °C, or 60 to 80 °C.

A high-pressure water electrolyser hence results in the production of pressurised hydrogen at the cathode and pressurised oxygen at the anode, the produced oxygen and hydrogen gases having a higher pressure than atmospheric pressure. What is required to perform high-pressure electrolysis is to pressurize the water used in the electrolysis process. As pressurising water requires less power than pressuring a gas, the use of a high-pressure water electrolyser results in the production of pressurised oxygen-rich gas at minimized power consumption.

When the stream of raw nitric acid containing residual $NO_x$ gas 27 is bleached, the amounts of $NO_x$ gases and nitrous acid $HNO_2$ in the nitric acid solution are reduced. This in turn results in less brown fumes coming out of the nitric acid solution. In addition, the nitric acid solution provided by the bleacher is of a higher quality, that is purer. Conveniently, when the stream of raw nitric acid containing residual $NO_x$ gas 27 is bleached, the supply of the second oxygen-containing gas 68 is achieved through the oxygen-rich bleaching gas 72 and, in turn, through the bleacher 62 and the off-gases 77.

In one embodiment according to the production plant of the disclosure, the production plant further comprises a stream of a second oxygen-rich gas 74 in direct fluid communication with any tail gas stream, particularly a stream of a pressurized oxygen-rich gas in direct fluid communication with any tail gas stream upstream the first pressure release means 7.

The feeding of a stream of a second oxygen-rich gas 74 allows to reduce the amount of the first oxygen-rich gas 50 having to be provided to the mixing unit 35. In particular, the stream of the second oxygen-rich gas 74 can be fed downstream the heat exchange system 43 and upstream the first pressure release means 7, which allows more power to be exported from the first pressure release means 7.

In one embodiment according to the production plant of the disclosure, the production plant further comprises the first oxygen-rich gas 50, the second oxygen-containing gas 68, 72, 77, the stream of the second oxygen-rich gas 74, the oxygen-rich bleaching gas 72 and the off-gases 77 are at least partly provided by a high-pressure water electrolyser 63.

Conveniently, the high-pressure water electrolyser 63 provides oxygen to all the various points in the production plant where oxygen needs to be fed. In particular, the supply of oxygen from the electrolyser 63 is sufficient to provide all of the oxygen of first oxygen-rich gas 50, the second oxygen-rich gas 74, the second oxygen-containing gas 68, the oxygen-rich bleaching gas 72 and the oxygen-rich off-gases 77. In this manner, the system is simplified and can comprise a single source of oxygen from which oxygen-containing gas streams at the desired pressure, following standard pressure adjustment, can be produced. In addition, supplying additional pressurised oxygen-rich gas upstream the absorption tower improves the absorption of $NO_x$ gases in the absorption tower, which, in its turn, results in additional nitric acid production and reduction of the emissions to the atmosphere. In addition, or alternatively, the size of the absorption tower can be reduced.

Another advantage of the presence of a high-pressure water electrolyser lies in the potential to, in parallel to producing oxygen gas that can be used in nitric acid production, also produce hydrogen gas. Such hydrogen gas is produced in a green manner, that is without the conventional use of natural gas which results in the production of the green-house gas carbon dioxide, $CO_2$. The hydrogen gas can then be used in the production of ammonia in an Haber-Bosch or also conventionally named synthesis gas unit. The high-pressure water electrolyser then enables the integration of the ammonia and nitric acid production processes.

*Method for producing nitric acid*

In one aspect of the disclosure, a method for producing nitric acid at reduced power consumption and reduced emissions, in a production plant according to the production plant of the disclosure, is disclosed. The method comprises the steps of a) compressing air in the air compressor **36,** thereby providing compressed air **34**; b) supplying compressed air **34** obtained in step a) to the mixing apparatus **35**; c) supplying the ammonia gas stream **32** to the mixing apparatus **35,** thereby producing the ammonia/oxygen-containing gas mixture **14**; d) oxidising ammonia in the ammonia/oxygen-containing gas mixture **14** in the ammonia converter **37** at a pressure equal to or higher than P1 and lower than P2, thereby producing the gaseous $NO_x$ gas/steam mixture **15** comprising water and nitric oxide; e) cooling the $NO_x$ gas in the gaseous $NO_x$ gas/steam mixture **15** in the heat exchange system **43** and in the gas/cooler condenser **38,** thereby producing an aqueous diluted nitric acid mixture **17** and the gaseous $NO_x$ stream **22**; f) compressing the gaseous $NO_x$ stream **22** in the $NO_x$ gas compressor **40,** thereby providing the pressurised $NO_x$ compressed gas stream **24** having a pressure P2; g) absorbing the pressurised gaseous $NO_x$ stream **24** in the absorption tower **41,** thereby providing the stream of raw nitric acid-containing residual $NO_x$ gas **27** and the tail gas **5** comprising $NO_x$ gases; h) heating the tail gas **5** in the heat exchange system **43,** with the heat from the $NO_x$ gas/steam mixture **15** coming from the ammonia converter **37,** in particular to a temperature ranging from 150 to 650 °C; i) cooling the compressed $NO_x$ gas stream **24** in the additional gas cooler/condenser **39,** in particular thereby providing the compressed $NO_x$ gas stream **24** having a temperature ranging from 20 to 60 °C; and j) expanding at least part of the tail gas **5** obtained in step h) in the first pressure release means **7,** thereby providing the first expanded tail gas **64**.

The method is characterised in that it further comprises the steps of k) splitting a stream of tail gas downstream the absorption tower **41** with the first means for splitting **55** into the first tail gas stream **10** and the second tail gas stream **80,** and/or with the second means for splitting **82** into the third tail gas stream **83, 84** and the fourth tail gas stream **85**; l) mixing the first tail gas stream **10** with the first oxygen-rich gas **50** and compressed air **34,** thereby providing the first oxygen-containing gas **56,** and/or mixing the third tail gas stream **83, 84** with compressed air **34** and the first oxygen-rich gas **50,** thereby providing the second oxygen-containing gas **68, 72, 77**; m) adjusting the flow of the first oxygen-rich gas **50** being mixed in step l) or the flow of the ammonia gas stream **32,** such as to maintain the oxygen to ammonia molar ratio inside the ammonia converter **37** to a ratio of at least 1.2, in particular between 1.2 and 9; n) supplying the first oxygen-containing gas **56** to the mixing unit **35**; o) adjusting the flow of the second oxygen-containing gas **68** such that a tail gas stream **5, 10, 64, 69, 80, 83, 84, 85** (downstream the absorption tower **41**) contains at least 0.5% by volume oxygen; and p) supplying the second oxygen-containing gas **68, 72, 77** at a pressure equal to or higher than P1 and up to P2 downstream the ammonia converter **37** and upstream the $NO_x$ gas compressor **40,** or at a pressure higher than P2 downstream the $NO_x$ gas compressor **40** and upstream the absorption tower **41**.

Typically, P1 ranges from 2 to 6 bara and P2 ranges from 9 to 16 bara. The person skilled in the art will determine the optimal concentrations of oxygen in the gases entering the ammonia converter **37** and the absorption tower **41,** in order for the catalytic conversion of ammonia to nitric oxide to proceed optimally in the ammonia converter **37** and for the absorption of $NO_x$ gases in the absorption tower **41** to proceed optimally. The person skilled in the art will also weigh out the benefits of increasing the oxygen content in the absorption tower **41,** namely a reduced tower size due to improved absorption, against the drawback of a higher gas volume downstream the absorption tower **41,** which implies equipment, such as heat exchangers, of a larger size, for heating tail gas.

The inventors have found that, instead of supplying primary and secondary air solely as compressed air **34** provided by an air compressor **36,** it is possible to recirculate the first tail gas stream **10** and/or the third tail gas stream **83, 84,** provided by the first means for splitting **55** and the second means for splitting **82,** respectively. The first oxygen-rich gas **50** having a pressure P1 and the second oxygen-containing gas **68** respectively provide oxygen to the ammonia converter **37** and to the absorption tower **41,** such that, even at reduced amounts of compressed air **34** air provided by the air compressor **36,** the concentration of oxygen in the ammonia converter **37** and in the absorption tower **41** is at least equal to that in a state-of-the-art dual pressure nitric acid plant. The person skilled in the art will realise that, if the pressure of the first oxygen-rich gas **50** is at a pressure such that the pressure of the first oxygen-containing gas **56** is, the relevant pressure drop being accounted for, lower than the operating pressure of the ammonia converter **37,** the first oxygen-rich gas **50** can be compressed through the air compressor **36.** The fluid communication between compressed air and the first oxygen-rich gas **50** is then introduced inside the air compressor **36.**

Therefore, tail gas can be recirculated both as primary and secondary air. Consequently, less compressed air **34** is to be supplied such that less air has to be compressed and the power demand on the air compressor **34** is reduced. At the same time, the size of the air compressor **36** and that of a conventional second pressure release means **60,** in which the tail gas **5** is expanded in a state-of-the-art dual pressure nitric acid plant, are reduced, such that the footprint of the plant is reduced. Furthermore, the $NO_x$ emissions leaving the production plant are also reduced. Consequently, the size of the treatment unit for treating those $NO_x$ emissions is reduced with respect to the size in the corresponding state-of-the art dual pressure nitric acid plant.

In one embodiment according to the method of the disclosure, the method further comprises the step of q) adjusting the flow of the first and/or the third tail gas stream **10, 83, 84.** The control of the flow of the first tail gas **10** enables to retain further control on the pressure and temperature inside the ammonia converter **37.** Similarly, control of the flow of the third tail gas **83, 84** enables to retain further control on the pressure and temperature inside the absorption tower **41.**

In one embodiment according to the method of the disclosure, the first tail gas stream **10** is mixed in step l), and wherein the expanded tail gas **64** is splitted in step k), and wherein the method further comprises the steps of r) before step h), heating up, in the heat exchanger **79,** the tail gas **5** obtained in step g) with the first expanded tail gas **64** obtained in step j), thereby bringing the tail gas to be mixed in step l) to a temperature below 300 °C; s) treating the tail gas **5** obtained in the De-NO$_x$ treatment unit **70** before step h) and after step r); t) expanding the second tail gas stream **80** in the second pressure release means **60,** thereby providing the second expanded tail gas **69**; and u) recovering at least part of the heat energy generated in the ammonia converter **37** in the steam turbine **51.** More in particular, the first tail gas stream **10** is mixed in step l), and wherein the expanded tail gas **64** is splitted in step k), and wherein the method further comprises the steps of r) heating up, in the heat exchanger **79,** a tail gas stream which is colder than the first expanded tail gas **64** obtained in step j), thereby bringing the tail gas to be mixed in step l) to a temperature below 300 °C; s) treating the heated tail gas stream from step r) in the De-NO$_x$ treatment unit **70**; t) expanding the second tail gas stream **80** in the second pressure release means **60,** thereby providing the second expanded tail gas **69**; and u) recovering at least part of the heat energy generated in the ammonia converter **37** in the steam turbine **51.**

Advantageously, the first means for splitting **55** is located downstream the heat exchange system **43.** Indeed, both the first tail gas stream **10** and the second tail gas stream **80** are then at an optimal temperature. This means that the first tail gas stream **10** is at a temperature below 300 °C, such that the first tail gas stream **10** can be fed to the ammonia converter **37** without the amount of ammonia fed through the stream **32** having to be adjusted, in order to maintain the temperature at which the ammonia converter **37** is operable. Typically, the ammonia converter is operated at a temperature ranging from 800 to 950 °C. In addition, the location of the first means for splitting **55** downstream the heat exchange system **43** confers to the second tail gas stream **80** an optimal temperature for being expanded such as to provide an optimum of energy which can be used to power, at least partly, the air compressor **36** or the NO$_x$ gas compressor **40.**

Further, the presence of a steam turbine **51** allows for the recovery of the heat of the steam produced in the ammonia converter **37** and this recovered heat can be used, at least partly, for powering the air compressor **36** or the NO$_x$ gas compressor **40.**

In particular, the tail gas **5** exiting the outlet **6** of the absorption tower **41** is heated in the heat exchanger **73,** in particular in a heat exchanger 67 of the heat exchange system **43** and then in the heat exchanger **73,** from an initial temperature ranging from 20 to 250 °C, to a temperature ranging from 100 to 450 °C. Subsequently, the tail gas exiting the heat exchanger **79** is heated in the heat exchange system **43,** in particular in a heat exchanger **66** of the heat exchange system **43,** to a temperature ranging from 200 to 550 °C. The tail gas exiting the heat exchanger **79** then is at an optimal temperature for being treated in the De-NO$_x$ treatment unit **70** and, therefore, the De-NO$_x$ treatment unit **70** is located between the heat exchanger **73** and the tail gas heater **43.** The person skilled in the art will, without any difficulty, select the proper location for the De-NO$_x$ treatment unit **70** such that the operating temperature of the De-NO$_x$ treatment unit **70** is in agreement with the temperature of the corresponding tail gas stream. In the presence of a De-NO$_x$ treatment unit **70,** the NO$_x$ emissions leaving the production plant through the second tail gas stream **69, 80** are reduced.

In particular, part of the tail gas **5,** that is the second tail gas stream **83, 84** provided by the second means for splitting **82,** can be recirculated downstream the ammonia converter **37** and upstream the NO$_x$ gas compressor **40** in the case of the third tail gas stream **83** has a pressure equal to or higher than P1 and lower than P2, or downstream the NO$_x$ gas compressor **40** and upstream the absorption tower **41** in the case of the third tail gas stream **84** has a pressure higher than P2, which reduces the duty on secondary air to be provided by the air compressor **36.**

In one embodiment according to the method of the disclosure, the method further comprises the step of v) bleaching the stream of raw nitric acid-containing residual NO$_x$ gas **27** obtained in step g) in the bleacher **62,** thereby producing the stream of bleached nitric acid **75.** When the stream of raw nitric acid containing residual NO$_x$ gas **27** is bleached, the amounts of NO$_x$ gases and nitrous acid HNO$_2$ in the nitric acid solution are reduced. This in turn results in less brown fumes coming out of the nitric acid solution. In addition, the nitric acid solution provided by the bleacher is of a higher quality, that is purer. In particular, oxygen-rich gas, such as provided by a high-pressure water electrolyzer, may be provided to the bleacher **62** as the bleaching gas **72,** thereby generating bleaching off gases **77,** which are subsequently mixed with the gaseous NOx stream **22, 24.** In this way, an efficient use of an oxygen-rich bleaching gas is made to increase the oxygen content in the absorption tower **41,** thereby increasing the absorption of the NO$_x$ gases in step g) and reducing the corresponding emissions to air. In particular, the oxygen-rich bleaching gas **72** is provided by a high pressure water electrolyser **63**: as less energy is required to pressurise water than to pressurise oxygen gas, pressurised oxygen gas is obtained at minimum power consumption. Conveniently, when the stream of raw nitric acid containing residual NO$_x$ gas **27** is bleached, the supply of the second oxygen-containing gas **68** is achieved through the oxygen-rich bleaching gas **72** and, in turn, through the bleacher **62** and the off-gases **77.**

In one embodiment according to the method of the disclosure, the method further comprises the step of w) supplying the stream of an oxygen-rich gas **74,** particularly as a stream of a pressurized oxygen-rich gas, to a tail gas stream, particularly upstream the first pressure release means **7.** The feeding of a stream of a second oxygen-rich gas **74** allows to reduce the amount of the first oxygen-rich gas **50** having to be provided to the mixing unit **35.** In particular, the stream of the second oxygen-rich gas **74** can be fed downstream the heat exchange system **43** and upstream the first pressure release means **7,** which allows more power to be exported from the first pressure release means **7.**

In one embodiment according to the method of the disclosure, the method further comprises the step of x) operating the high-pressure water electrolyser **63,** such as at a temperature of 50 to 80 °C, or 60 to 80 °C, and a gas pressure of 9 to 30 bar, preferably 15 to 30 bar, thereby producing pressurized oxygen-gas; and y) providing, from the oxygen produced by the water electrolyser **63** in step x), at least part of the first oxygen-rich gas **50,** the second oxygen-containing gas **68, 72, 77,** the second oxygen-rich gas **74,** the oxygen-rich bleaching gas **72** and the off-gases **77.** In certain embodiments, the pressurized oxygen or oxygen-rich gas **50** is mixed with the compressed air stream. Conveniently, the high-pressure water electrolyser **63** provides oxygen to all the various points in the production plant where oxygen needs to be fed. In particular, the supply of oxygen from the electrolyser **63** is sufficient to provide all of the oxygen of first oxygen-rich gas **50,** the second oxygen-rich gas **74,** the second oxygen-containing gas **68,** the oxygen-rich bleaching gas **72** and the oxygen-rich off-gases **77.** In this manner, the system is simplified and can comprise a single source of oxygen from which oxygen-containing gas streams at the desired pressure, following standard pressure adjustment, can be produced.

Another advantage of the presence of a high-pressure water electrolyser lies in the potential to, in parallel to producing oxygen gas that can be used in nitric acid production, also produce hydrogen gas. Such hydrogen gas is produced in a green manner, that is without the conventional use of natural gas which results in the production of the greenhouse gas carbon dioxide, $CO_2$. The hydrogen gas can then be used in the production of ammonia in an Haber-Bosch or also conventionally named synthesis gas unit. The high-pressure water electrolyser then enables the integration of the ammonia and nitric acid production processes.

_Use of the production plant of the disclosure_

In one aspect of the disclosure, the use of the production plant of the disclosure for performing the method of the disclosure, is disclosed.

_Method for revamping a state-of-the art dual pressure nitric acid production plant_

In one aspect of the disclosure, a method for revamping a production plant for producing nitric acid, comprising an air compressor **36** for providing a compressed air stream **34**; a mixing apparatus **35,** for mixing compressed air stream **34** with an ammonia gas stream **32,** to produce an ammonia/oxygen-containing gas mixture **14**; an ammonia converter **37** operable at a pressure equal to or higher than P1 and lower than P2, for oxidising ammonia in the ammonia/oxygen-containing gas mixture **14,** to produce a $NO_x$ gas/steam mixture **15** comprising water and nitric oxide; a first gas cooler/condenser **38,** downstream the ammonia converter **37,** to produce an aqueous diluted nitric acid mixture **17** and a gaseous $NO_x$ stream **22**; a $NO_x$ gas compressor **40** for compressing the gaseous $NO_x$ stream **22,** to produce a compressed $NO_x$ gas stream **24** at a pressure P2; an absorption tower **41** for absorbing the $NO_x$ gases from the compressed $NO_x$ gas stream **24** in water, to produce a stream of raw nitric acid-containing residual $NO_x$ gas **27** and a tail gas **5** comprising $NO_x$ gases, comprising an absorption tower tail gas outlet **6** for evacuating the tail gas **5**; a heat exchange system **43** for heating a tail gas stream with the heat from the $NO_x$ gas/steam mixture **15** coming from the ammonia converter **37**; a second gas cooler/condenser **39** for separating and condensing steam from the compressed $NO_x$ gas stream **24** before it is absorbed in the absorption tower **41**;; and first pressure release means **7** for expanding a tail gas stream, to produce a first expanded tail gas **64** at a pressure equal to or higher than P1 and lower than P2, wherein the first pressure release means **7** can at least partly power the $NO_x$ gas compressor **40** and/or the means for pressurizing **78**; into a production plant according to the production plant of the disclosure, is disclosed.

The revamping method comprises the steps of introducing a supply for a first oxygen-rich gas **50** in fluid communication with compressed air **34**; introducing a means for regulating (not shown) the concentration of ammonia and/or of oxygen in the ammonia converter **37,** particularly a means for controlling the flow of the first oxygen-rich gas **50** in the oxygen-containing gas **56** and/or a means for controlling the flow of the ammonia gas stream **32,** for maintaining the oxygen to ammonia molar ratio inside the ammonia converter **37** at a ratio of at least 1.2; introducing a supply for a second oxygen-containing gas **68, 72, 77,** having either (a) a pressure equal to or higher than P1 and up to P2, for supplying oxygen upstream the $NO_x$ gas compressor **40** or (b) a pressure higher than P2, for supplying oxygen to the compressed $NO_x$ gas stream **24,** such that a tail gas stream **5, 10, 64, 69, 80, 83, 84, 85** contains at least 0.5% by volume oxygen; introducing a first means for splitting **55** and/or a second means for splitting **82** a stream of tail gas downstream the absorption tower **41,** wherein (i) the first means for splitting **55** is a means for splitting a tail gas stream into a first tail gas stream **10** and a second tail gas stream **80,** and wherein the first tail gas stream **10** has a pressure equal to or higher than P1 and up to P2 and is in fluid communication with the first oxygen-rich gas **50** and compressed air **34,** and wherein the mixing of compressed air **34,** the first oxygen-rich gas **50** and the first tail gas stream **10** provides the first oxygen-containing gas **56,** and (ii) the second means for splitting **82** is a means for splitting a tail gas stream into a third tail gas stream **83** and a fourth tail gas stream **85,** wherein the third tail gas stream **83** has a pressure equal to or higher than P1 and up to P2 and is in fluid communication with compressed air **34** and the first oxygen-rich gas **50,** and wherein the mixing of the third tail gas **83,** compressed air **34** and the first oxygen-rich gas **50** provides the second oxygen-containing gas **68, 72, 77,** and wherein the second oxygen-containing gas **68, 72, 77** is supplied downstream the ammonia converter **37** and upstream the NO$_x$ gas compressor **40,** or the second means for splitting **82** is a means for splitting a tail gas stream into a third tail gas stream **84** and a fourth gas stream **85,** and wherein the third tail gas stream **84** is in fluid communication with compressed air **34** and the first oxygen-rich gas **50,** and wherein the mixing of the third tail gas **83,** compressed air **34** and the first oxygen-rich gas **50** and the pressurisation of the mixed third tail gas **83,** compressed air **34** and the first oxygen-rich gas **50** in a means for pressurising **78** provide the second oxygen-containing gas **68, 72, 77** at a pressure higher than P2, and wherein the second oxygen-containing gas **68, 72, 77** is supplied downstream the NO$_x$ gas compressor **40** and upstream the absorption tower **41.**

As defined herein, an oxygen-rich gas is a gas comprising more than 21 vol% of oxygen, more in particular more than 30 vol%, more than 35 vol%, more than 40 vol%, more than 50 vol%, more than 60 vol%, more than 70 vol%, more than 80 vol%, more than 90 vol%, more than 95 vol%, more than 98 vol% and more than 99 vol%, more in particular 100 vol% of oxygen. An oxygen-rich gas can, for example, be provided by an air separation unit or by a water electrolyser.

As defined herein, an air compressor is capable of providing at least 300000m$^3$/h of compressed air.

As defined herein, steam is water vapours. As defined herein, the term flow refers to either a volumetric flow or a mass flow.

Typically, the heat exchange system **43** comprises at least two heat exchangers **66, 67.** The person skilled in the art will realise that it is possible to split a tail gas stream inside the heat exchange system, for example between the heat exchanger **66** and **67.** In particular, the production plant comprises further heat exchange systems, such that the gaseous NO$_x$ stream **22** or the NO$_x$ compressed gas stream **24** exchange heat with the tail gas **5.**

As defined herein, a tail gas stream is any gas stream provided downstream the absorption tower, between the absorption tower **41** and the communication between the first tail gas stream **52** and the first oxygen-rich gas **50.**

As defined herein, a means for splitting is any means suitable for splitting a tail gas stream such as to generate e.g. a first tail gas stream **10** and a second sail gas stream **80,** or a third tail gas stream **83, 84** and a fourth tail gas stream **85.** In particular, the means for splitting is a T-connection having one inlet and two outlets, such that a gas flowing through the inlet of the T-connection is splitted into two gas streams of identical chemical composition.

As defined herein, pressure release means is any suitable means for reducing the pressure of a gas stream. In particular, the pressure release means is a gas expander or a gas ejector. The gas ejector provides the benefits of a simplified equipment, at the same time as the pressure of the tail gas stream being processed through the ejector is reduced. This tail gas stream being processed through the gas ejector is the motive gas and the second gas fed to the ejector can, for example, be ambient air at a pressure lower than the tail gas stream being processed through the gas ejector, for example atmospheric pressure. In particular, the tail gas stream is fed as the motive gas to the ejector and the second gas fed to the ejector is oxygen at a pressure lower than the tail gas stream being processed through the gas ejector. Both the feeding of air or oxygen through the gas ejector contribute to increasing the concentration in the first tail gas stream **10** and/or the third tail gas stream **83, 84** being recycled, thereby reducing the demand on the first oxygen-rich gas **50.** In particular, the tail gas stream is fed as the motive gas to the ejector and the second gas fed to the ejector is the NO$_x$ gas/steam mixture **15** or the gaseous NO$_x$ stream **22.**

The person skilled in the art will realise that the means for splitting can be incorporated inside the pressure release means, provided that the pressure release means includes at least two outlets for the gas stream being depressurised.

As defined herein, a means for regulating the concentration of ammonia and/or of oxygen is any means for suitable for achieving a target concentration of ammonia and/or of oxygen. In particular, such means are gas flow control means, in particular a flow control valve or an orifice or a guide vane, for controlling the flow of the first oxygen-rich gas **50** and/or of the ammonia gas stream **32.** In particular, the means is an integrated process control system, in which the concentration of oxygen is measured and the target flow of oxygen is thereby determined and achieved from controlling the flow of the first oxygen-rich gas **50.** The oxygen concentration can also be determined from computing, by using the oxygen concentration of the first oxygen-rich gas **50,** the flow at which the first oxygen-rich gas **50** and of the ammonia gas stream **32** are introduced in the system, and the relative flow values at which the first oxygen-rich gas **50** and the ammonia gas stream **32** are mixed.

Typically, P1 ranges from 2 to 6 bara and P2 ranges from 9 to 16 bara. The person skilled in the art will determine the optimal concentrations of oxygen in the gases entering the ammonia converter **37** and the absorption tower **41,** in order for the catalytic conversion of ammonia to nitric oxide to proceed optimally in the ammonia converter **37** and for the absorption of NO$_x$ gases in the absorption tower **41** to proceed optimally. The person skilled in the art will also weigh out the benefits of increasing the oxygen content in the absorption tower **41,** namely a reduced tower size due to improved absorption, against the drawback of a higher gas volume downstream the absorption tower **41,** which implies equipment, such as heat exchangers, of a larger size, for heating tail gas.

## Examples

### 1. Recirculation of tail gas at 24% and use of an additional tail gas expander

Reference is made to Figure 3A. Ambient air **4** was compressed in an air compressor **36,** providing compressed air **34.** Ammonia **32** was mixed with compressed air **34** in a mixing apparatus **35.** The oxygen to ammonia molar ratio at the inlet of the mixing apparatus was at least 1.2 The resulting ammonia/air mixture **14** was fed to an ammonia converter **37,** at a temperature ranging from 800 to 950 °C and operating at a pressure of 5.2 bar. In the ammonia converter **37,** ammonia was oxidized over a mixed platinum/rhodium catalyst, thus obtaining a low-pressure NOx gas/steam mixture **15,** comprising water and nitric oxide (NO). The heat energy of the mixture coming out of the ammonia converter was recovered using a steam turbine **51** and also by heating the tail gas **5** as is described below. The NOx gas/stream mixture was subsequently cooled down in a water cooler/condenser **38** to a temperature where the water condenses, and an aqueous diluted nitric acid mixture **17** was separated from a gaseous NOx stream **18** and sent to an absorption tower **41.** Subsequently, the gaseous NOx stream was further oxidized to further convert the NO to $NO_2$ and $N_2O_4$, providing a gaseous NOx stream **22** that was compressed in the NOx gas compressor **40** to a pressure of 12 bar, thereby producing the pressurised NOx gaseous stream **24.** The pressurised NOx gaseous stream **24** was cooled down in a cooler/condenser **39** and sent to the absorption tower **41** too. Inside the absorption tower unit **41,** the NOx gas reacted with water to produce the tail gas **5** and a stream of raw nitric acid **27** containing residual NOx gas. The heat from the gaseous NOx stream **24** was used for heating the tail gas **5** in the tail gas heater **43** to 575 °C, thereby producing a heated tail gas. The heated tail gas was split over a T-tube **55.** Following splitting in the T-tube **55,** 24% of the heated tail gas was expanded over a tail gas expander **7,** thereby providing an expanded tail gas **64** which was then mixed with compressed air stream **34** and an oxygen-rich gas **50** at a pressure of 8 bar, before the resulting compressed air **34**/oxygen-rich gas **50**/expanded tail gas **64** was mixed with ammonia **32** in the mixing apparatus **35.** The steps subsequent to mixing in the mixing apparatus **35** described above were repeated. The oxygen to ammonia molar ratio at the inlet of the mixing apparatus was at least 1.2. The residual 76% of heated tail gas was sent to an additional tail gas expander **60.** The residual NOx gas in the raw nitric acid stream **27** was stripped out with a gaseous medium **72** that was oxygen produced by a water electrolyser **63,** inside a bleacher unit **62** operating at about the same pressure as the ammonia converter of 5.2 bar. The water electrolyser **63** provided the oxygen-rich gas **50** and also oxygen between the ammonia converter **37** and the absorption tower **41,** such that the concentration of oxygen in the tail gas **5** was at least 0.5% by volume. The drive power for both the air compressor **36** and the NOx compressor **40** originated from the tail gas expander **7,** the additional tail gas expander **60** and the steam turbine **51.** The net power associated to the air compressors **36,** the NOx gas compressor **40** , the tail gas expander **7** and the additional tail gas expander **60** was 37 kW/h/t 100% $HNO_3$. This power was produced by the steam turbine **51.**

### 2. Comparative example: no recirculation of tail gas

Ambient air **4** was compressed in an air compressor **36,** providing compressed air stream **34.** Ammonia **32** was mixed with the oxygen-rich gas/compressed air stream mixture **53,** in a mixing apparatus **35,** and the resulting ammonia/air mixture **14** was fed to an ammonia converter **37,** operating at a pressure of 5.2 bar. The oxygen to ammonia molar ratio inside the mixing apparatus **35** was at least 1.2. In the ammonia converter **37,** ammonia was oxidized over a mixed platinum/rhodium catalyst, thus obtaining a low-pressure NOx gas/steam mixture **15,** comprising water and nitric oxide (NO). The heat energy of the mixture coming out of the ammonia converter was recovered using a steam turbine **51.** The NOx gas/stream mixture was subsequently cooled down in a water cooler/condenser **38** to a temperature where the water condenses, and an aqueous diluted nitric acid mixture **17** was separated from a gaseous NOx stream **18** and sent to an absorption tower **41.** Subsequently, the gaseous NOx stream was further oxidized to further convert the NO to $NO_2$ and $N_2O_4$, providing a gaseous NOx stream **22** that was compressed in the NOx gas compressor **40** to a pressure of 12 bar, thereby producing the pressurised NOx gaseous stream **24.** The pressurised NOx gaseous stream **24** was cooled down in a cooler/condenser **39** and sent to the absorption tower **41** too. Inside the absorption tower **41,** the high pressure NOx gas reacted with water to produce the tail gas **5** and a stream of raw nitric acid **27** also containing residual NOx gas. The heat from the gaseous $NO_x$ stream **24** was used for heating the tail gas **5** in the tail gas heater **43** to 450 °C. The entire tail gas stream **5** was sent to the tail gas expander **7.** The residual NOx gas in the raw nitric acid stream **27** was then stripped out with compressed air **34,** inside the bleacher unit **62.** The bleacher unit **62** was generally operated at about the same pressure as the ammonia converter, 5.2 bar. The drive power for the air compressor **36** and the NOx compressor **40** originated from the tail gas expander **7** and the steam turbine **51.** The net power associated to the air compressor **36,** the NOx compressor **40** and the tail gas expander **7** was 75.5 kW/h/t 100% $HNO_3$. This power was produced by the steam turbine **51.**

Therefore, when compared to the example 1, a net power of 39 kWh/t 100% $HNO_3$(50%) was saved upon recirculating 24% of the tail gas.

**Claims**

1.  A production plant for producing nitric acid at reduced power consumption and reduced emissions, comprising:

    • an air compressor providing compressed air;
    • a supply for a first oxygen-rich gas, the mixing of the first oxygen-rich gas and of compressed air providing part of a first oxygen-containing gas;
    • a mixing apparatus, for mixing the first oxygen-containing gas with an ammonia gas stream, to produce an ammonia/oxygen-containing gas mixture;
    • an ammonia converter operable at a pressure equal to or higher than P1 and lower than P2, for oxidising ammonia in the ammonia/oxygen-containing gas mixture, to produce a NOx gas/steam mixture comprising water and nitric oxide;
    • a means for regulating the concentration of ammonia and/or of oxygen in the ammonia converter, particularly a means for controlling the flow of the first oxygen-rich gas in the oxygen-containing gas and/or a means for controlling the flow of the ammonia gas stream, for maintaining the oxygen to ammonia molar ratio inside the ammonia converter at a ratio of at least 1.2;
    • a first gas cooler/condenser downstream the ammonia converter, to produce an aqueous diluted nitric acid mixture and a gaseous NOx stream;
    • a NOx gas compressor for compressing the gaseous NOx stream, to produce a compressed $NO_x$ gas stream at a pressure P2;
    • an absorption tower for absorbing the $NO_x$ gases from the compressed $NO_x$ gas stream in water, to produce a stream of raw nitric acid-containing residual $NO_x$ gas and a tail gas comprising $NO_x$ gases, comprising an absorption tower tail gas outlet for evacuating the tail gas;
    • a heat exchange system located upstream the gas cooler/condenser for heating a tail gas stream with the heat from the $NO_x$ gas/steam mixture coming from the ammonia converter;
    • a second gas cooler/condenser for separating and condensing steam from the compressed $NO_x$ gas stream before the stream is provided to the absorption tower;
    • a second oxygen-containing gas, having either:

        a) a pressure equal to or higher than P1 and up to P2, for supplying oxygen downstream the ammonia converter and upstream the $NO_x$ gas compressor; or
        b) a pressure higher than P2, for supplying oxygen to the compressed $NO_x$ gas stream;

    • a means for controlling the flow of the second oxygen-containing gas such that a tail gas stream contains at least 0.5% by volume oxygen; and
    • a first pressure release means located downstream the heat exchange system, for expanding a tail gas stream, to produce a first expanded tail gas at a pressure equal to or higher than P1 and lower than P2, wherein the first pressure release means can at least partly power the $NO_x$ gas compressor and/or the air compressor;

    **characterised in that** the production plant further comprises:

    • a first and/or a second means for splitting a gas stream, wherein

        (i) the first means for splitting is a means for splitting a tail gas stream into a first tail gas stream and a second tail gas stream, wherein the first tail gas stream has a pressure equal to or higher than P1 and up to P2 and is in fluid communication with the first oxygen-rich gas and compressed air, and wherein the mixing of compressed air, the first oxygen-rich gas and the first tail gas stream provides the first oxygen-containing gas, and
        (ii) the second means for splitting is a means for splitting a tail gas stream into a third tail gas stream and a fourth tail gas stream, wherein the third tail gas stream has a pressure equal to or higher than P1 and up to P2 and is in fluid communication with compressed air and the first oxygen-rich gas, and wherein the mixing of the third tail gas, compressed air and the first oxygen-rich gas provides the second oxygen-containing gas, and wherein the second oxygen-containing gas is supplied downstream the ammonia converter and upstream the $NO_x$ gas compressor;
        or

the second means for splitting is a means for splitting a tail gas stream into a third tail gas stream and a fourth gas stream, and wherein the third tail gas stream is in fluid communication with compressed air and the first oxygen-rich gas, and wherein the mixing of the third tail gas, compressed air and the first oxygen-rich gas; and the pressurisation of the mixed third tail gas, compressed air and the first oxygen-rich gas in a means for pressurising provide the second oxygen-containing gas at a pressure higher than P2, and wherein the second oxygen-containing gas is supplied downstream the $NO_x$ gas compressor and upstream the absorption tower.

2. The production plant according to claim 1, wherein the production plant further comprises a means for controlling the flow of the first and/or third tail gas stream.

3. The production plant according to any one of claims 1 to 2, wherein the production plant further comprises one or more of:

   • a steam turbine, wherein the steam turbine can at least partly power the $NO_x$ gas compressor and/or the air compressor;
   • a heat exchanger, for exchanging heat between the first expanded tail gas and a tail gas stream colder than the first expanded tail gas wherein the first expanded tail gas exits the heat exchanger at a temperature below 300 °C, and wherein:

   - the first expanded tail gas downstream the heat exchanger is in direct fluid communication with the first means for splitting; and/or
   - the tail gas stream which is colder than the first expanded tail gas is splitted into a third tail gas stream and a fourth tail gas stream;

   • a De-$NO_x$ treatment unit; and
   • a second pressure release means for expanding the second tail gas stream to atmospheric pressure, to produce a second expanded tail gas.

4. The production plant according to any one of claims 1 to 3, further comprising a bleacher for bleaching the stream of raw nitric acid-containing residual $NO_x$ gas, to provide a stream of bleached nitric acid, having an inlet in fluid communication with a high-pressure water electrolyser supplying an oxygen-rich bleaching gas, and an outlet for off-gases in fluid communication with any gas stream downstream the ammonia converter and upstream the $NO_x$ gas compressor if the bleacher operates at a pressure equal to or higher than P1 and up to equal to P2, or in fluid communication with any stream downstream the $NO_x$ gas compressor and upstream the absorption tower if the bleacher operates at a pressure higher than P2, such that the supply for the second oxygen-containing gas comes at least partly from the off-gases.

5. The production plant according to any one of claims 1 to 4, further comprising a stream of a second oxygen-rich gas in direct fluid communication with any tail gas stream, particularly a stream of a pressurized oxygen-rich gas in direct fluid communication with any tail gas stream upstream the first pressure release means.

6. The production plant according to any one of claims 1 to 5, wherein the first oxygen-rich gas, the second oxygen-containing gas, the second oxygen-rich gas, the oxygen-rich bleaching gas and the off-gases are at least partly provided by a high-pressure water electrolyser.

7. A method for producing nitric acid at reduced power consumption and reduced emissions, in a production plant according to any one of claims 1 to 6, comprising the steps of:

   a) compressing air in the air compressor, thereby providing compressed air;
   b) supplying compressed air obtained in step a) to the mixing apparatus;
   c) supplying the ammonia gas stream to the mixing apparatus, thereby producing the ammonia/oxygen-containing gas mixture;
   d) oxidising ammonia in the ammonia/oxygen-containing gas mixture in the ammonia converter at a pressure equal to or higher than P1 and lower than P2, thereby producing the gaseous $NO_x$ gas/steam mixture comprising water and nitric oxide;
   e) cooling the $NO_x$ gas in the gaseous $NO_x$ gas/steam mixture in the heat exchange system and in the gas/cooler condenser, thereby producing an aqueous diluted nitric acid mixture and the gaseous $NO_x$ stream;

f) compressing the gaseous $NO_x$ stream in the $NO_x$ gas compressor, thereby providing the pressurised $NO_x$ compressed gas stream having a pressure P2;

g) absorbing the pressurised gaseous $NO_x$ stream in the absorption tower, thereby providing the stream of raw nitric acid-containing residual $NO_x$ gas and the tail gas comprising $NO_x$ gases;

h) heating the tail gas in the heat exchange system, with the heat from the $NO_x$ gas/steam mixture coming from the ammonia converter, in particular to a temperature ranging from 150 to 650 °C;

i) cooling the compressed $NO_x$ gas stream in the additional gas cooler/condenser, in particular thereby providing the compressed $NO_x$ gas stream having a temperature ranging from 20 to 60 °C; and

j) expanding at least part of the tail gas obtained in step h) in the first pressure release means, thereby providing the first expanded tail gas;

**characterised in that** the method further comprises the steps of:

k) splitting a tail gas stream with a first means for splitting into a first tail gas stream and a second tail gas stream, and/or with a second means for splitting into a third tail gas stream and a fourth tail gas stream;

l) mixing the first tail gas stream with the first oxygen-rich gas and compressed air, thereby providing the first oxygen-containing gas, and/or mixing the third tail gas stream with compressed air and the first oxygen-rich gas, thereby providing the second oxygen-containing gas;

m) adjusting the flow of the first oxygen-rich gas being mixed in step l) or the flow of the ammonia gas stream, such as to maintain the oxygen to ammonia molar ratio inside the ammonia converter to a ratio of at least 1.2;

n) supplying the first oxygen-containing gas to the mixing uni;

o) adjusting the flow of the second oxygen-containing gas such that a tail gas stream contains at least 0.5% by volume oxygen; and

p) supplying the second oxygen-containing gas at a pressure equal to or higher than P1 and up to P2 downstream the ammonia converter and upstream the $NO_x$ gas compressor, or at a pressure higher than P2 downstream the $NO_x$ gas compressor and upstream the absorption tower.

8. The method according to claim 7, further comprising the step of:
q) adjusting the flow of the first and/or the third tail gas stream.

9. The method according to any one of claims 7 to 8, wherein the first tail gas stream is mixed in step l), and wherein the first expanded tail gas is splitted in step k), and wherein the method further comprises the steps of:

r) heating up, in the heat exchanger, the tail gas which is colder than the first expanded tail gas with the first expanded tail gas obtained in step j), thereby bringing the tail gas to be mixed in step l) to a temperature below 300 °C;

s) treating the tail gas stream heated in step r) in the De-$NO_x$ treatment unit;

t) expanding the second tail gas stream in the second pressure release means, thereby providing the second expanded tail gas; and

u) recovering at least part of the heat energy generated in the ammonia converter in the steam turbine.

10. The method according to any one of claims 7 to 9, wherein the third tail gas stream is mixed in step l), and wherein the tail gas obtained in step g) is split in step k) into a third tail gas stream and a fourth tail gas stream.

11. The method according to any one of claims 7 to 10, further comprising the step of:
v) bleaching the stream of raw nitric acid-containing residual $NO_x$ gas obtained in step g) in the bleacher, thereby producing the stream of bleached nitric acid.

12. The method according to any one of claims 7 to 11, further comprising the step of:
w) supplying the stream of the second oxygen-rich gas, particularly as a stream of a pressurized oxygen-rich gas, to a tail gas stream, particularly upstream the first pressure release means.

13. The method according to any one of claims 6 to 10, further comprising the steps of:

x) operating the high-pressure water electrolyser, thereby producing pressurized oxygen-gas; and

y) providing, from the oxygen produced by the water electrolyser in step x), at least part of the first oxygen-rich gas, the second oxygen-rich gas, the second oxygen-containing gas, the oxygen-rich bleaching gas and the oxygen-rich off-gases.

14. The use of the production plant according to any one of claims 1 to 6 for performing the method according to any one of claims 7 to 13.

15. A method for revamping an existing production plant for producing nitric acid, wherein the existing production plant comprises:

- an air compressor for providing a compressed air stream;
- a mixing apparatus, for mixing compressed air stream with an ammonia gas stream, to produce an ammonia/oxygen-containing gas mixture;
- an ammonia converter operable at a pressure equal to or higher than P1 and lower than P2, for oxidising ammonia in the ammonia/oxygen-containing gas mixture, to produce a $NO_x$ gas/steam mixture comprising water and nitric oxide;
- a first gas cooler/condenser, downstream the ammonia converter, to produce an aqueous diluted nitric acid mixture and a gaseous $NO_x$ stream;
- a NOx gas compressor for compressing the gaseous NOx stream, to produce a compressed NOx gas stream at a pressure P2;
- an absorption tower for absorbing the NOx gases from the compressed NOx gas stream in water, to produce a stream of raw nitric acid-containing residual $NO_x$ gas and a tail gas comprising NOx gases, comprising an absorption tower tail gas outlet for evacuating the tail gas;
- a heat exchange system for heating a tail gas stream with the heat from the $NO_x$ gas/steam mixture coming from the ammonia converter; a second gas cooler/condenser for separating and condensing steam from the compressed $NO_x$ gas stream before it is absorbed in the absorption tower; and
- first pressure release means for expanding a tail gas stream, to produce a first expanded tail gas at a pressure equal to or higher than P1 and lower than P2, wherein the first pressure release means can at least partly power the $NO_x$ gas compressor;

into a production plant according to any one of claims 1 to 6, wherein the method comprises the steps of:

- introducing a supply for a first oxygen-rich gas in fluid communication with compressed air;
- introducing a means for regulating the concentration of ammonia and/or of oxygen in the ammonia converter, particularly a means for controlling the flow of the first oxygen-rich gas in the oxygen-containing gas and/or a means for controlling the flow of the ammonia gas stream, for maintaining the oxygen to ammonia molar ratio inside the ammonia converter at a ratio of at least 1.2;
- introducing a supply for a second oxygen-containing gas, having either:

  (a) a pressure equal to or higher than P1 and up to P2, for supplying oxygen upstream the $NO_x$ gas compressor; or
  (b) a pressure higher than P2, for supplying oxygen to the compressed $NO_x$ gas stream, such that a tail gas stream contains at least 0.5% by volume oxygen;

- introducing a first means for splitting and/or a second means for splitting a stream of tail gas downstream the absorption tower, wherein

  (i) the first means for splitting is a means for splitting a tail gas stream into a first tail gas stream and a second tail gas stream, and wherein the first tail gas stream has a pressure equal to or higher than P1 and up to P2 and is in fluid communication with the first oxygen-rich gas and compressed air, and wherein the mixing of compressed air, the first oxygen-rich gas and the first tail gas stream provides the first oxygen-containing gas, and
  (ii) the second means for splitting is a means for splitting a tail gas stream into a third tail gas stream and a fourth tail gas stream, wherein the third tail gas stream has a pressure equal to or higher than P1 and up to P2 and is in fluid communication with compressed air and the first oxygen-rich gas, and wherein the mixing of the third tail gas, compressed air and the first oxygen-rich gas provides the second oxygen-containing gas, and wherein the second oxygen-containing gas is supplied downstream the ammonia converter and upstream the $NO_x$ gas compressor;
  or
  the second means for splitting is a means for splitting a tail gas stream into a third tail gas stream and a fourth gas stream, and wherein the third tail gas stream is in fluid communication with compressed air and the first oxygen-rich gas, and wherein the mixing of the third tail gas, compressed air and the first oxygen-rich gas and the pressurisation of the mixed third tail gas, compressed air and the first oxygen-rich gas in a means for pressurising provide the second oxygen-containing gas at a pressure higher than P2, and wherein the second oxygen-containing gas is supplied downstream the $NO_x$ gas compressor and upstream the absorption tower.

**Patentansprüche**

1. Produktionsanlage zur Herstellung von Salpetersäure mit verringertem Stromverbrauch und verringerten Emissionen, umfassend:

• einen Luftkompressor, der Druckluft bereitstellt;
• eine Zufuhr für ein erstes sauerstoffreiches Gas, wobei das Mischen des ersten sauerstoffreichen Gases und der Druckluft einen Teil eines ersten sauerstoffhaltigen Gases bereitstellt;
• eine Mischvorrichtung zum Mischen des ersten sauerstoffhaltigen Gases mit einem Ammoniakgasstrom, um ein Ammoniak/sauerstoffhaltiges-Gas-Gemisch zu erzeugen;
• einen Ammoniakkonverter, der bei einem Druck von gleich oder höher als P1 und niedriger als P2 betrieben werden kann, um Ammoniak in dem Ammoniak/sauerstoffhaltiges-Gas-Gemisch zu oxidieren, um ein NOx-Gas/DampfGemisch, das Wasser und Stickoxid umfasst, zu erzeugen;
• ein Mittel zum Regulieren der Konzentration von Ammoniak und/oder Sauerstoff in dem Ammoniakkonverter, insbesondere ein Mittel zum Steuern des Flusses des ersten sauerstoffreichen Gases in dem sauerstoffhaltigen Gas und/oder ein Mittel zum Steuern des Flusses des Ammoniakgasstroms, um das molare Verhältnis von Sauerstoff zu Ammoniak in dem Ammoniakkonverter bei einem Verhältnis von wenigstens 1,2 zu halten;
• einen ersten Gaskühler/Kondensator stromabwärts des Ammoniakkonverters, um ein wässriges verdünntes Salpetersäuregemisch und einen gasförmigen NOx-Strom zu erzeugen;
• einen NOx-Gaskompressor zum Komprimieren des gasförmigen NOx-Stroms, um einen komprimierten $NO_X$-Gasstrom mit einem Druck P2 zu erzeugen;
• einen Absorptionsturm zum Absorbieren der $NO_X$-Gase aus dem komprimierten $NO_X$-Gasstrom in Wasser, um einen Strom von rohem Salpetersäure-enthaltendem $NO_X$-Restgas und ein Endgas, das $NO_X$-Gase umfasst, zu erzeugen, umfassend einen Absorptionsturm-Endgasauslass zum Ablassen des Endgases; und
• ein Wärmetauschsystem, das stromaufwärts des Gaskühlers/Kondensators angeordnet ist, um einen Endgasstrom mit der Wärme aus dem $NO_X$-Gas/DampfGemisch, das aus dem Ammoniakkonverter kommt, zu erhitzen;
• einen zweiten Gaskühler/Kondensator zum Abtrennen und Kondensieren von Dampf aus dem komprimierten $NO_X$-Gasstrom, bevor der Strom dem Absorptionsturm zugeführt wird;
• ein zweites sauerstoffhaltiges Gas mit entweder:

a) einem Druck von gleich oder höher als P1 und bis zu P2, um Sauerstoff stromabwärts des Ammoniakkonverters und stromaufwärts des $NO_X$-Gaskompressors zuzuführen; oder
b) einem Druck von höher als P2, um dem komprimierten $NO_X$-Gasstrom Sauerstoff zuzuführen;

• ein Mittel zum Steuern des Flusses des zweiten sauerstoffhaltigen Gases, so dass ein Endgasstrom wenigstens 0,5 Vol.-% Sauerstoff enthält; und
• ein erstes Druckentlastungsmittel, das stromabwärts des Wärmetauschsystems angeordnet ist, zum Expandieren eines Endgasstroms, um ein erstes expandiertes Endgas mit einem Druck von gleich oder höher als P1 und niedriger als P2 zu erzeugen, wobei das erste Druckentlastungsmittel den $NO_X$-Gaskompressor und/oder den Luftkompressor wenigstens teilweise mit Energie versorgen kann;

**dadurch gekennzeichnet, dass** die Produktionsanlage ferner umfasst:

• ein erstes und/oder ein zweites Mittel zum Aufteilen eines Gasstroms, wobei

(i) das erste Mittel zum Aufteilen ein Mittel zum Aufteilen eines Endgasstroms in einen ersten Endgasstrom und einen zweiten Endgasstrom ist, wobei der erste Endgasstrom einen Druck von gleich oder höher als P1 und bis zu P2 aufweist und in Fluidverbindung mit dem ersten sauerstoffreichen Gas und Druckluft steht, und wobei Mischen von Druckluft, dem ersten sauerstoffreichen Gas und dem ersten Endgasstrom das erste sauerstoffhaltige Gas bereitstellt, und
(ii) das zweite Mittel zum Aufteilen ein Mittel zum Aufteilen eines Endgasstroms in einen dritten Endgasstrom und einen vierten Endgasstrom ist, wobei der dritte Endgasstrom einen Druck von gleich oder höher als P1 und bis zu P2 aufweist und in Fluidverbindung mit Druckluft und dem ersten sauerstoffreichen Gas steht, und wobei Mischen des dritten Endgases, der Druckluft und des ersten sauerstoffreichen Gases das zweite sauerstoffhaltige Gas bereitstellt, und wobei das zweite sauerstoffhaltige Gas stromabwärts des Ammoniakkonverters und stromaufwärts des NO$_X$-Gaskompressors zugeführt wird;
oder
das zweite Mittel zum Aufteilen ein Mittel zum Aufteilen eines Endgasstroms in einen dritten Endgasstrom und einen vierten Gasstrom ist, und wobei der dritte Endgasstrom in Fluidverbindung mit Druckluft und dem ersten sauerstoffreichen Gas steht, und wobei Mischen des dritten Endgases, der Druckluft und des ersten sauerstoffreichen Gases; und Druckbeaufschlagung des gemischten dritten Endgases, der Druckluft und des ersten sauerstoffreichen Gases in einem Mittel zur Druckbeaufschlagung das zweite sauerstoffhaltige Gas mit einem Druck von höher als P2 bereitstellen, und wobei das zweite sauerstoffhaltige Gas stromabwärts des NO$_X$-Gaskompressors und stromaufwärts des Absorptionsturms zugeführt wird.

2. Produktionsanlage nach Anspruch 1, wobei die Produktionsanlage ferner ein Mittel zum Steuern des Flusses des ersten und/oder dritten Endgasstroms umfasst.

3. Produktionsanlage nach einem der Ansprüche 1 bis 2, wobei die Produktionsanlage ferner eines oder mehrere umfasst von:

• einer Dampfturbine, wobei die Dampfturbine den NO$_X$-Gaskompressor und/oder den Luftkompressor wenigstens teilweise mit Energie versorgen kann;
• einem Wärmetauscher zum Wärmetausch zwischen dem ersten expandierten Endgas und einem Endgasstrom, der kälter als das erste expandierte Endgas ist, wobei das erste expandierte Endgas mit einer Temperatur unter 300 °C aus dem Wärmetauscher austritt, und wobei:

- das erste expandierte Endgas stromabwärts des Wärmetauschers in direkter Fluidverbindung mit dem ersten Mittel zum Aufteilen steht; und/oder
- der Endgasstrom, der kälter als das erste expandierte Endgas ist, in einen dritten Endgasstrom und einen vierten Endgasstrom aufgeteilt wird;

• einer Ent-NO$_X$-behandlungseinheit; und
• einem zweiten Druckentlastungsmittel zum Expandieren des zweiten Endgasstroms auf Atmosphärendruck, um ein zweites expandiertes Endgas zu erzeugen.

4. Produktionsanlage nach einem der Ansprüche 1 bis 3, ferner umfassend einen Bleicher zum Bleichen des Stroms von rohem Salpetersäure-enthaltendem NO$_X$-Restgas, um einen Strom von gebleichter Salpetersäure bereitzustellen, der einen Einlass in Fluidverbindung mit einer Hochdruck-Wasserelektrolysevorrichtung aufweist, die ein sauerstoffreiches Bleichgas bereitstellt, und einen Auslass für Abgase in Fluidverbindung mit einem beliebigen Gasstrom stromabwärts des Ammoniakkonverters und stromaufwärts des NO$_X$-Gaskompressors, wenn der Bleicher bei einem Druck von gleich oder höher als P1 und bis zu P2 arbeitet, oder in Fluidverbindung mit einem beliebigen Strom stromabwärts des NO$_X$-Gaskompressors und stromaufwärts des Absorptionsturms, wenn der Bleicher mit einem Druck über P2 arbeitet, so dass die Zufuhr für das zweite sauerstoffhaltige Gas wenigstens zum Teil aus den Abgasen kommt.

5. Produktionsanlage nach einem der Ansprüche 1 bis 4, ferner umfassend einen Strom eines zweiten sauerstoffreichen Gases in direkter Fluidverbindung mit einem beliebigen Endgasstrom, insbesondere einem Strom eines druckbeaufschlagten sauerstoffreichen Gases in direkter Fluidverbindung mit einem beliebigen Endgasstrom stromaufwärts des ersten Druckentlastungsmittels.

6. Produktionsanlage nach einem der Ansprüche 1 bis 5, wobei das erste sauerstoffreiche Gas, das zweite sauerstoffhaltige Gas, das zweite sauerstoffreiche Gas, das sauerstoffreiche Bleichgas und die Abgase wenigstens zum Teil von einer Hochdruck-Wasserelektrolysevorrichtung bereitgestellt werden.

7. Verfahren zur Herstellung von Salpetersäure mit verringertem Stromverbrauch und verringerten Emissionen in einer Produktionsanlage nach einem der Ansprüche 1 bis 6, umfassend die Schritte:

a) Komprimieren von Luft in dem Luftkompressor, um Druckluft bereitzustellen;

b) Zuführen von bei Schritt a) erhaltener Druckluft zu der Mischvorrichtung;

c) Zuführen des Ammoniakgasstroms zu der Mischvorrichtung, um das Ammoniak/sauerstoffhaltiges-Gas-Gemisch zu erzeugen;

d) Oxidieren von Ammoniak in dem Ammoniak/sauerstoffhaltiges-Gas-Gemisch in dem Ammoniakkonverter bei einem Druck von gleich oder höher als P1 und niedriger als P2, um das gasförmige $NO_x$-Gas/Dampf-Gemisch, das Wasser und Stickoxid umfasst, zu erzeugen;

e) Kühlen des $NO_x$-Gases in dem gasförmigen $NO_x$-Gas/Dampf-Gemisch in dem Wärmetauschsystem und in dem Gas/Kühler-Kondensator, um ein wässriges verdünntes Salpetersäuregemisch und den gasförmigen $NO_x$-Strom zu erzeugen;

f) Komprimieren des gasförmigen $NO_x$-Stroms in dem $NO_x$-Gaskompressor, um den druckbeaufschlagten komprimierten $NO_x$-Gasstrom mit einem Druck P2 bereitzustellen;

g) Absorbieren des druckbeaufschlagten gasförmigen $NO_x$-Stroms in dem Absorptionsturm, um den Strom von rohem Salpetersäure-enthaltendem $NO_x$-Restgas und das Endgas, das $NO_x$-Gase umfasst, bereitzustellen; und

h) Erhitzen des Endgases in dem Wärmetauschsystem, wobei die Wärme aus dem $NO_x$-Gas/Dampf-Gemisch aus dem Ammoniakkonverter kommt, insbesondere auf eine Temperatur in dem Bereich von 150 bis 650 °C;

i) Kühlen des komprimierten $NO_x$-Gasstroms in dem zusätzlichen Gaskühler/Kondensator, insbesondere um den komprimierten $NO_x$-Gasstrom mit einer Temperatur in dem Bereich von 20 bis 60 °C bereitzustellen; und

j) Expandieren wenigstens eines Teils des bei Schritt h) erhaltenen Endgases in dem ersten Druckentlastungsmittel, um das erste expandierte Endgas bereitzustellen;

**dadurch gekennzeichnet, dass** das Verfahren ferner die Schritte umfasst:

k) Aufteilen eines Endgasstroms mit einer ersten Mittel zum Aufteilen in einen ersten Endgasstrom und einen zweiten Endgasstrom und/oder mit einem zweiten Mittel zum Aufteilen in einen dritten Endgasstrom und einen vierten Endgasstrom;

l) Mischen des ersten Endgasstroms mit dem ersten sauerstoffreichen Gas und Druckluft, um das erste sauerstoffhaltige Gas bereitzustellen, und/oder Mischen des dritten Endgasstroms mit Druckluft und dem ersten sauerstoffreichen Gas, um das zweite sauerstoffhaltige Gas bereitzustellen;

m) Einstellen des Flusses des ersten sauerstoffreichen Gases, das bei Schritt l) gemischt wird, oder des Flusses des Ammoniakgasstroms, um das molare Verhältnis von Sauerstoff zu Ammoniak in dem Ammoniakkonverter bei einem Verhältnis von wenigstens 1,2 zu halten;

n) Zuführen des ersten sauerstoffhaltigen Gases zu der Mischeinheit;

o) Einstellen des Flusses des zweiten sauerstoffhaltigen Gases, so dass ein Endgasstrom wenigstens 0,5 Vol.-% Sauerstoff enthält; und

p) Zuführen des zweiten sauerstoffhaltigen Gases mit einem Druck von gleich oder höher als P1 und bis zu P2 stromabwärts des Ammoniakkonverters und stromaufwärts des $NO_x$-Gaskompressors oder mit einem Druck von höher als P2 stromabwärts des $NO_x$-Gaskompressors und stromaufwärts des Absorptionsturms.

8.  Verfahren nach Anspruch 7, ferner umfassend den Schritt: q) Einstellen des Flusses des ersten und/oder des dritten Endgasstroms.

9.  Verfahren nach einem der Ansprüche 7 bis 8, wobei der erste Endgasstrom bei Schritt l) gemischt wird und wobei das erste expandierte Endgas bei Schritt k) geteilt wird und wobei das Verfahren ferner die Schritte umfasst:

r) Erhitzen des Endgases, das kälter als das erste expandierte Endgas ist, in dem Wärmetauscher mit dem bei Schritt j) erhaltenen ersten expandierten Endgas, um das bei Schritt l) zu mischende Endgas auf eine Temperatur unter 300 °C zu bringen;

s) Behandeln des bei Schritt r) erhitzten Endgasstroms in der Ent-$NO_x$- behandlungseinheit;

t) Expandieren des zweiten Endgasstroms in dem zweiten Druckentlastungsmittel, um das zweite expandierte Endgas bereitzustellen; und

u) Rückgewinnen wenigstens eines Teils der in dem Ammoniakkonverter erzeugten Wärmeenergie in der Dampfturbine.

10. Verfahren nach einem der Ansprüche 7 bis 9, wobei der dritte Endgasstrom bei Schritt l) gemischt wird und wobei das bei Schritt g) erhaltene Endgas bei Schritt k) in einen dritten Endgasstrom und einen vierten Endgasstrom aufgeteilt wird.

11. Verfahren nach einem der Ansprüche 7 bis 10, ferner umfassend den Schritt:

v) Bleichen des bei Schritt g) erhaltenen Stroms von rohem Salpetersäure-enthaltendem $NO_x$-Restgas in dem Bleicher, um den Strom von gebleichter Salpetersäure zu erzeugen.

12. Verfahren nach einem der Ansprüche 7 bis 11, ferner umfassend den Schritt:

w) Zuführen des Stroms des zweiten sauerstoffreichen Gases, insbesondere als Strom eines druckbeaufschlagten sauerstoffreichen Gases, zu einem Endgasstrom, insbesondere stromaufwärts des ersten Druckentlastungsmittels.

13. Verfahren nach einem der Ansprüche 6 bis 10, ferner umfassend die Schritte:

x) Betreiben der Hochdruck-Wasserelektrolysevorrichtung, um druckbeaufschlagtes Sauerstoffgas zu erzeugen; und

y) Bereitstellen wenigstens eines Teils des ersten sauerstoffreichen Gases, des zweiten sauerstoffreichen Gases, des zweiten sauerstoffhaltigen Gases, des sauerstoffreichen Bleichgases und der sauerstoffreichen Endgase aus dem von der Wasserelektrolysevorrichtung bei Schritt x) erzeugten Sauerstoff.

14. Verwendung der Produktionsanlage nach einem der Ansprüche 1 bis 6 zur Durchführung des Verfahrens nach einem der Ansprüche 7 bis 13.

15. Verfahren zum Umbauen einer bestehenden Produktionsanlage zur Herstellung von Salpetersäure, wobei die bestehende Produktionsanlage umfasst:

• einen Luftkompressor zum Bereitstellen eines Druckluftstroms;

• eine Mischvorrichtung zum Mischen eines Druckluftstroms mit einem Ammoniakgasstrom, um ein Ammoniak/sauerstoffhaltiges-Gas-Gemisch zu erzeugen;

• einen Ammoniakkonverter, der bei einem Druck von gleich oder höher als P1 und niedriger als P2 betrieben werden kann, um Ammoniak in dem Ammoniak/sauerstoffhaltiges-Gas-Gemisch zu oxidieren, um ein $NO_x$-Gas/-Dampf-Gemisch, das Wasser und Stickoxid umfasst, zu erzeugen;

• einen ersten Gaskühler/Kondensator stromabwärts des Ammoniakkonverters, um ein wässriges verdünntes Salpetersäuregemisch und einen gasförmigen $NO_x$-Strom zu erzeugen;

• einen NOx-Gaskompressor zum Komprimieren des gasförmigen NOx-Stroms, um einen komprimierten NOx-Gasstrom mit einem Druck P2 zu erzeugen;

• einen Absorptionsturm zum Absorbieren der $NO_x$-Gase aus dem komprimierten $NO_x$-Gasstrom in Wasser, um einen Strom von rohem Salpetersäure-enthaltendem $NO_x$-Restgas und ein Endgas, das $NO_x$-Gase umfasst, zu erzeugen, umfassend einen Absorptionsturm-Endgasauslass zum Ablassen des Endgases; und

• ein Wärmetauschsystem zum Erhitzen eines Endgasstroms mit der Wärme aus dem $NO_x$-Gas/Dampf-Gemisch, das aus dem Ammoniakkonverter kommt; einen zweiten Gaskühler/Kondensator zum Abtrennen und Kondensieren von Dampf aus dem komprimierten $NO_x$-Gasstrom, bevor er in dem Absorptionsturm absorbiert wird; und

• ein erstes Druckentlastungsmittel zum Expandieren eines Endgasstroms, um ein erstes expandiertes Endgas mit einem Druck von gleich oder höher als P1 und niedriger als P2 zu erzeugen, wobei das erste Druckentlastungsmittel den $NO_x$-Gaskompressor wenigstens teilweise mit Energie versorgen kann;

zu einer Produktionsanlage nach einem der Ansprüche 1 bis 6, wobei das Verfahren die Schritte umfasst:

• Einführen einer Zufuhr für ein erstes sauerstoffreiches Gas in Fluidverbindung mit Druckluft;

• Einführen eines Mittels zum Regulieren der Konzentration von Ammoniak und/oder Sauerstoff in dem Ammoniakkonverter, insbesondere eines Mittels zum Steuern des Flusses des ersten sauerstoffreichen Gases in dem sauerstoffhaltigen Gas und/oder eines Mittels zum Steuern des Flusses des Ammoniakgasstroms, um das molare Verhältnis von Sauerstoff zu Ammoniak in dem Ammoniakkonverter bei einem Verhältnis von wenigstens 1,2 zu halten;

• Einführen einer Zufuhr für ein zweites sauerstoffhaltiges Gas mit entweder:

a) einem Druck von gleich oder höher als P1 und bis zu P2 zum Zuführen von Sauerstoff stromaufwärts des $NO_x$-Gaskompressors; oder

b) einem Druck von höher als P2 zum Zuführen von Sauerstoff zu dem komprimierten $NO_x$-Gasstrom, so dass ein Endgasstrom wenigstens 0,5 Vol.-% Sauerstoff enthält;

• Einführen eines ersten Mittels zum Aufteilen und/oder eines zweiten Mittels zum Aufteilen eines Endgasstroms stromabwärts des Absorptionsturms, wobei

(i) das erste Mittel zum Aufteilen ein Mittel zum Aufteilen eines Endgasstroms in einen ersten Endgasstrom und einen zweiten Endgasstrom ist, wobei der erste Endgasstrom einen Druck von gleich oder höher als P1 und bis zu P2 aufweist und in Fluidverbindung mit dem ersten sauerstoffreichen Gas und Druckluft steht, und wobei Mischen von Druckluft, dem ersten sauerstoffreichen Gas und dem ersten Endgasstrom das erste sauerstoffhaltige Gas bereitstellt, und

(ii) das zweite Mittel zum Aufteilen ein Mittel zum Aufteilen eines Endgasstroms in einen dritten Endgasstrom und einen vierten Endgasstrom ist, wobei der dritte Endgasstrom einen Druck von gleich oder höher als P1 und bis zu P2 aufweist und in Fluidverbindung mit Druckluft und dem ersten sauerstoffreichen Gas steht, und wobei Mischen des dritten Endgases, der Druckluft und des ersten sauerstoffreichen Gases das zweite sauerstoffhaltige Gas bereitstellt, und wobei das zweite sauerstoffhaltige Gas stromabwärts des Ammoniakkonverters und stromaufwärts des $NO_x$-Gaskompressors zugeführt wird;

oder

das zweite Mittel zum Aufteilen ein Mittel zum Aufteilen eines Endgasstroms in einen dritten Endgasstrom und einen vierten Gasstrom ist, und wobei der dritte Endgasstrom in Fluidverbindung mit Druckluft und dem ersten sauerstoffreichen Gas steht, und wobei Mischen des dritten Endgases, der Druckluft und des ersten sauerstoffreichen Gases; und Druckbeaufschlagung des gemischten dritten Endgases, der Druckluft und des ersten sauerstoffreichen Gases in einem Mittel zur Druckbeaufschlagung das zweite sauerstoffhaltige Gas mit einem Druck von höher als P2 bereitstellen, und wobei das zweite sauerstoffhaltige Gas stromabwärts des $NO_x$-Gaskompressors und stromaufwärts des Absorptionsturms zugeführt wird.

## Revendications

1. Installation de production d'acide nitrique à consommation d'énergie et émissions réduites, comprenant :

• un compresseur d'air fournissant de l'air comprimé ;

• une alimentation en un premier gaz riche en oxygène, le mélange du premier gaz riche en oxygène et d'air comprimé fournissant une partie d'un premier gaz contenant de l'oxygène ;

• un appareil de mélange, pour mélanger le premier gaz contenant de l'oxygène avec un flux gazeux d'ammoniac, afin de produire un mélange gazeux contenant de l'ammoniac et de l'oxygène ;

• un convertisseur d'ammoniac pouvant fonctionner à une pression égale ou supérieure à P1 et inférieure à P2, pour oxyder l'ammoniac présent dans le mélange gazeux contenant de l'ammoniac et de l'oxygène, afin de produire un mélange gazeux NOx/vapeur comprenant de l'eau et de l'oxyde nitrique ;

• un moyen de régulation de la concentration en ammoniac et/ou en oxygène dans le convertisseur d'ammoniac, de préférence un moyen de régulation du débit du premier gaz riche en oxygène dans le gaz contenant de l'oxygène et/ou un moyen de régulation du débit du flux gazeux d'ammoniac, afin de maintenir le rapport molaire oxygène/ammoniac à l'intérieur du convertisseur d'ammoniac à un rapport d'au moins 1,2 ;

• un premier refroidisseur/condenseur de gaz en aval du convertisseur d'ammoniac, pour produire un mélange aqueux d'acide nitrique dilué et un flux gazeux de NOx ;

• un compresseur de gaz NOx pour comprimer le flux gazeux de NOx, afin de produire un flux gazeux de $NO_x$ comprimé à une pression P2 ;

• une tour d'absorption pour absorber les gaz $NO_x$ provenant du flux gazeux de $NO_x$ comprimé dans de l'eau, afin de produire un flux gazeux de $NO_x$ résiduel brut contenant de l'acide nitrique et un gaz résiduaire comprenant des gaz $NO_x$, comprenant une sortie de gaz résiduaire de tour d'absorption pour évacuer le gaz résiduaire ;

• un système d'échange de chaleur situé en amont du refroidisseur/condenseur de gaz pour chauffer un flux de gaz résiduaire à l'aide de la chaleur du mélange gazeux $NO_x$/vapeur provenant du convertisseur d'ammoniac ;

• un deuxième refroidisseur/condenseur de gaz pour séparer et condenser la vapeur provenant du flux gazeux de $NO_x$ comprimé avant l'introduction de vapeur dans la tour d'absorption ;

• un deuxième gaz contenant de l'oxygène, ayant soit :

a) une pression égale ou supérieure à P1 et allant jusqu'à P2, pour introduire de l'oxygène en aval du convertisseur d'ammoniac et en amont du compresseur de gaz NOx ; ou

b) une pression supérieure à P2, pour introduire de l'oxygène dans le flux gazeux de $NO_x$ comprimé ;

• un moyen de régulation du débit du deuxième gaz contenant de l'oxygène de telle sorte qu'un flux de gaz résiduaire contienne au moins 0,5 % en volume d'oxygène ; et

• un premier moyen de détente situé en aval du système d'échange de chaleur, pour détendre un flux de gaz résiduaire, afin de produire un premier gaz résiduaire détendu à une pression égale ou supérieure à P1 et inférieure à P2, le premier moyen de détente pouvant alimenter au moins partiellement le compresseur de gaz $NO_x$ et/ou le compresseur d'air ;

**caractérisée en ce que** l'installation de production comprend en outre :

• un premier et/ou un deuxième moyen de séparation d'un flux gazeux, dans lequel

(i) le premier moyen de séparation est un moyen de séparation d'un flux de gaz résiduaire en un premier flux de gaz résiduaire et un deuxième flux de gaz résiduaire, le premier flux de gaz résiduaire ayant une pression égale ou supérieure à P1 et allant jusqu'à P2 et étant en communication fluidique avec le premier gaz riche en oxygène et l'air comprimé, et le mélange de l'air comprimé, du premier gaz riche en oxygène et du premier flux de gaz résiduaire produisant le premier gaz contenant de l'oxygène, et

(ii) le deuxième moyen de séparation est un moyen de séparation d'un flux de gaz résiduaire en un troisième flux de gaz résiduaire et un quatrième flux de gaz résiduaire, le troisième flux de gaz résiduaire ayant une pression égale ou supérieure à P1 et allant jusqu'à P2 et étant en communication fluidique avec l'air comprimé et le premier gaz riche en oxygène, et le mélange du troisième gaz résiduaire, de l'air comprimé et du premier gaz riche en oxygène produisant le deuxième gaz contenant de l'oxygène, le deuxième gaz contenant de l'oxygène étant introduit en aval du convertisseur d'ammoniac et en amont du compresseur de gaz $NO_x$ ;
ou
le deuxième moyen de séparation est un moyen de séparation d'un flux de gaz résiduaire en un troisième flux de gaz résiduaire et un quatrième flux de gaz, et le troisième flux de gaz résiduaire étant en communication fluidique avec l'air comprimé et le premier gaz riche en oxygène, et le mélange du troisième gaz résiduaire, de l'air comprimé et du premier gaz riche en oxygène ; et la mise sous pression du mélange du troisième gaz résiduaire, d'air comprimé et du premier gaz riche en oxygène dans un moyen de mise sous pression produisant le deuxième gaz contenant de l'oxygène à une pression supérieure à P2, le deuxième gaz contenant de l'oxygène étant introduit en aval du compresseur de gaz $NO_x$ et en amont de la tour d'absorption.

2. Installation de production selon la revendication 1, comprenant en outre un moyen de régulation du débit du premier et/ou du troisième flux de gaz résiduaire.

3. Installation de production selon l'une quelconque des revendications 1 à 2, comprenant en outre l'un ou plusieurs parmi :

• une turbine à vapeur, pouvant alimenter au moins partiellement le compresseur de gaz $NO_x$ et/ou le compresseur d'air ;
• un échangeur de chaleur, pour échanger de la chaleur entre le premier gaz résiduaire détendu et un flux de gaz résiduaire plus froid que le premier gaz résiduaire détendu, le premier gaz résiduaire détendu sortant de l'échangeur de chaleur à une température inférieure à 300 °C, et **caractérisée en ce que** :

- le premier gaz résiduaire détendu en aval de l'échangeur de chaleur est en communication fluidique directe avec le premier moyen de séparation ; et/ou
- le flux de gaz résiduaire qui est plus froid que le premier gaz résiduaire détendu est séparé en un troisième flux de gaz résiduaire et un quatrième flux de gaz résiduaire ;

• une unité de traitement d'élimination de $NO_x$ ; et
• un deuxième moyen de détente pour détendre le deuxième flux de gaz résiduaire à pression atmosphérique, afin de produire un deuxième gaz résiduaire détendu.

4. Installation de production selon l'une quelconque des revendications 1 à 3, comprenant en outre un blanchisseur pour blanchir le flux gazeux de $NO_x$ résiduel brut contenant de l'acide nitrique, afin de produire un flux d'acide nitrique blanchi, comportant une entrée en communication fluidique avec un électrolyseur d'eau à haute pression fournissant un gaz de blanchiment riche en oxygène, et une sortie pour les effluents gazeux en communication fluidique avec tout flux gazeux en aval du convertisseur d'ammoniac et en amont du compresseur de gaz $NO_x$ si le blanchisseur fonctionne à une pression égale ou supérieure à P1 et allant jusqu'à P2, ou en communication fluidique avec tout flux en aval du compresseur de gaz NO$_x$ et en amont de la tour d'absorption si le blanchisseur fonctionne à une pression supérieure à P2, de telle sorte que l'alimentation pour le deuxième gaz contenant de l'oxygène provienne au moins partiellement des effluents gazeux.

5. Installation de production selon l'une quelconque des revendications 1 à 4, comprenant en outre un flux d'un deuxième gaz riche en oxygène en communication fluidique directe avec tout flux de gaz résiduaire, de préférence un flux d'un gaz riche en oxygène sous pression en communication fluidique directe avec tout flux de gaz résiduaire en amont du premier moyen de détente.

6. Installation de production selon l'une quelconque des revendications 1 à 5, dans laquelle le premier gaz riche en oxygène, le deuxième gaz contenant de l'oxygène, le deuxième gaz riche en oxygène, le gaz de blanchiment riche en oxygène et les effluents gazeux sont au moins partiellement fournis par un électrolyseur d'eau à haute pression.

7. Procédé de production d'acide nitrique à consommation d'énergie et émissions réduites, dans une installation de production selon l'une quelconque des revendications 1 à 6, comprenant les étapes consistant à :

a) comprimer de l'air dans le compresseur d'air, de façon à produire un flux d'air comprimé ;
b) introduire l'air comprimé obtenu à l'étape a) dans l'appareil de mélange ;
c) introduire le flux gazeux d'ammoniac dans l'appareil de mélange, de façon à produire le mélange gazeux contenant de l'ammoniac et de l'oxygène ;
d) oxyder l'ammoniac présent dans le mélange gazeux contenant de l'ammoniac et de l'oxygène dans le convertisseur d'ammoniac à une pression égale ou supérieure à P1 et inférieure à P2, de façon à produire le mélange gazeux NO$_x$/vapeur comprenant de l'eau et de l'oxyde nitrique ;
e) refroidir le gaz NO$_x$ présent dans le mélange gazeux NO$_x$/vapeur dans le système d'échange de chaleur et dans le refroidisseur/condenseur de gaz, de façon à produire un mélange aqueux d'acide nitrique dilué et le flux gazeux de NO$_x$;
f) comprimer le flux gazeux de NO$_x$ dans le compresseur de gaz NO$_x$, de façon à produire le flux gazeux de NO$_x$ comprimé ayant une pression P2 ;
g) absorber le flux gazeux de NO$_x$ comprimé dans la tour d'absorption, de façon à produire le flux gazeux de NO$_x$ résiduel brut contenant de l'acide nitrique et le gaz résiduaire comprenant des gaz NO$_x$ ;
h) chauffer le gaz résiduaire dans le système d'échange de chaleur, à l'aide de la chaleur du mélange gazeux NO$_x$/vapeur provenant du convertisseur d'ammoniac, de préférence à une température comprise entre 150 et 650 °C ;
i) refroidir le flux gazeux de NO$_x$ comprimé dans le refroidisseur/condenseur de gaz supplémentaire, de préférence de façon à produire le flux gazeux de NO$_x$ comprimé ayant une température comprise entre 20 et 60 °C ; et
j) détendre au moins une partie du gaz résiduaire obtenu à l'étape h) dans le premier moyen de détente, de façon à produire le premier gaz résiduaire détendu ; **caractérisé en ce que** le procédé comprend en outre les étapes consistant à :
k) séparer un flux de gaz résiduaire à l'aide d'un premier moyen de séparation en un premier flux de gaz résiduaire et un deuxième flux de gaz résiduaire, et/ou d'un deuxième moyen de séparation en un troisième flux de gaz résiduaire et un quatrième flux de gaz résiduaire ;
l) mélanger le premier flux de gaz résiduaire avec le premier gaz riche en oxygène et de l'air comprimé, de façon à produire le premier gaz contenant de l'oxygène, et/ou mélanger le troisième flux de gaz résiduaire avec de l'air comprimé et le premier gaz riche en oxygène, de façon à produire le deuxième gaz contenant de l'oxygène ;
m) régler le débit du premier gaz riche en oxygène étant mélangé à l'étape l) ou le débit du flux gazeux d'ammoniac, de manière à maintenir le rapport molaire oxygène/ammoniac dans le convertisseur d'ammoniac à un rapport d'au moins 1,2 ;
n) introduire le premier gaz contenant de l'oxygène dans l'unité de mélange ;
o) régler le débit du deuxième gaz contenant de l'oxygène de telle sorte qu'un flux de gaz résiduaire contienne au moins 0,5 % en volume d'oxygène ; et
p) introduire le deuxième gaz contenant de l'oxygène à une pression égale ou supérieure à P1 et allant jusqu'à P2 en aval du convertisseur d'ammoniac et en amont du compresseur de gaz NO$_x$, ou à une pression supérieure à P2 en aval du compresseur de gaz NO$_x$ et en amont de la tour d'absorption.

8. Procédé selon la revendication 7, comprenant en outre l'étape consistant à :
q) régler le débit du premier et/ou du troisième flux de gaz résiduaire.

**9.** Procédé selon l'une quelconque des revendications 7 à 8, dans lequel le premier flux de gaz résiduaire est mélangé à l'étape l) et le premier gaz résiduaire détendu est séparé à l'étape k), et le procédé comprenant en outre les étapes consistant à :

r) réchauffer, dans l'échangeur de chaleur, le gaz résiduaire qui est plus froid que le premier gaz résiduaire détendu à l'aide du premier gaz résiduaire détendu obtenu à l'étape j), de façon à amener le gaz résiduaire à mélanger à l'étape l) à une température inférieure à 300 °C ;
s) traiter le flux de gaz résiduaire chauffé à l'étape r) dans l'unité de traitement d'élimination de $NO_x$ ;
t) détendre le deuxième flux de gaz résiduaire dans le deuxième moyen de détente, de façon à produire le deuxième gaz résiduaire détendu ; et
u) récupérer au moins une partie de l'énergie thermique générée dans le convertisseur d'ammoniac dans la turbine à vapeur.

**10.** Procédé selon l'une quelconque des revendications 7 à 9, dans lequel le troisième flux de gaz résiduaire est mélangé à l'étape l), et dans lequel le gaz résiduaire obtenu à l'étape g) est séparé à l'étape k) en un troisième flux de gaz résiduaire et un quatrième flux de gaz résiduaire.

**11.** Procédé selon l'une quelconque des revendications 7 à 10, comprenant en outre l'étape consistant à :
v) blanchir le flux gazeux de $NO_x$ résiduel brut contenant de l'acide nitrique obtenu à l'étape g) dans le blanchisseur, de façon à produire le flux d'acide nitrique blanchi.

**12.** Procédé selon l'une quelconque des revendications 7 à 11, comprenant en outre l'étape consistant à :
w) introduire le flux du deuxième gaz riche en oxygène, de préférence sous la forme d'un flux d'un gaz riche en oxygène sous pression, dans un flux de gaz résiduaire, de préférence en amont du premier moyen de détente.

**13.** Procédé selon l'une quelconque des revendications 6 à 10, comprenant en outre les étapes consistant à :

x) faire fonctionner l'électrolyseur d'eau à haute pression, de façon à produire de l'oxygène gazeux sous pression ; et
y) fournir, à partir de l'oxygène produit par l'électrolyseur d'eau à l'étape x), au moins une partie du premier gaz riche en oxygène, du deuxième gaz riche en oxygène, du deuxième gaz contenant de l'oxygène, du gaz de blanchiment riche en oxygène et des effluents gazeux riches en oxygène.

**14.** Utilisation de l'installation de production selon l'une quelconque des revendications 1 à 6 pour réaliser le procédé selon l'une quelconque des revendications 7 à 13.

**15.** Procédé de rénovation d'une installation de production d'acide nitrique existante, l'installation de production d'acide nitrique existante comprenant :

• un compresseur d'air pour fournir un flux d'air comprimé ;
• un appareil de mélange, pour mélanger le flux d'air comprimé avec un flux gazeux d'ammoniac, afin de produire un mélange gazeux contenant de l'ammoniac et de l'oxygène ;
• un convertisseur d'ammoniac pouvant fonctionner à une pression égale ou supérieure à P1 et inférieure à P2, pour oxyder l'ammoniac présent dans le mélange gazeux contenant de l'ammoniac et de l'oxygène, afin de produire un mélange gazeux $NO_x$/vapeur comprenant de l'eau et de l'oxyde nitrique ;
• un premier refroidisseur/condenseur de gaz en aval du convertisseur d'ammoniac, pour produire un mélange aqueux d'acide nitrique dilué et un flux gazeux de $NO_x$ ;
• un compresseur de gaz NOx pour comprimer le flux gazeux de NOx, afin de produire un flux gazeux de NOx comprimé à une pression P2 ;
• une tour d'absorption pour absorber les gaz NOx provenant du flux gazeux de NOx comprimé dans de l'eau, afin de produire un flux gazeux de $NO_x$ résiduel brut contenant de l'acide nitrique et un gaz résiduaire comprenant des gaz NOx, comprenant une sortie de gaz résiduaire de tour d'absorption pour évacuer le gaz résiduaire ;
• un système d'échange de chaleur situé en amont du refroidisseur/condenseur de gaz pour chauffer un flux de gaz résiduaire à l'aide de la chaleur du mélange gazeux $NO_x$/vapeur provenant du convertisseur d'ammoniac; un deuxième refroidisseur/condenseur de gaz pour séparer et condenser la vapeur provenant du flux gazeux de $NO_x$ comprimé avant que celui-ci soit absorbé dans la tour d'absorption ; et
• un premier moyen de détente pour détendre un flux de gaz résiduaire, afin de produire un premier gaz résiduaire détendu à une pression égale ou supérieure à P1 et inférieure à P2, le premier moyen de détente pouvant alimenter au moins partiellement le compresseur de gaz $NO_x$ ;

dans une installation de production selon l'une quelconque des revendications 1 à 6, le procédé comprenant les étapes consistant à :

• introduire une alimentation en un premier gaz riche en oxygène en communication fluidique avec l'air comprimé ;
• introduire un moyen de régulation de la concentration en ammoniac et/ou en oxygène dans le convertisseur d'ammoniac, de préférence un moyen de régulation du débit du premier gaz riche en oxygène dans le gaz contenant de l'oxygène et/ou un moyen de régulation du débit du flux gazeux d'ammoniac, afin de maintenir le rapport molaire oxygène/ammoniac à l'intérieur du convertisseur d'ammoniac à un rapport d'au moins 1,2 ;
• introduire une alimentation pour un deuxième gaz contenant de l'oxygène, ayant soit :

a) une pression égale ou supérieure à P1 et allant jusqu'à P2, pour introduire de l'oxygène en amont du compresseur de gaz $NO_x$; ou
b) une pression supérieure à P2, pour introduire de l'oxygène dans le flux gazeux de $NO_x$ comprimé, de telle sorte qu'un flux de gaz résiduaire contienne au moins 0,5 % en volume d'oxygène ;

• introduire un premier moyen de séparation et/ou un deuxième moyen de séparation d'un flux de gaz résiduaire en aval de la tour d'absorption, **caractérisé en ce que**

(i) le premier moyen de séparation est un moyen de séparation d'un flux de gaz résiduaire en un premier flux de gaz résiduaire et un deuxième flux de gaz résiduaire, et le premier flux de gaz résiduaire ayant une pression égale ou supérieure à P1 et allant jusqu'à P2 et étant en communication fluidique avec le premier gaz riche en oxygène et l'air comprimé, et le mélange de l'air comprimé, du premier gaz riche en oxygène et du premier flux de gaz résiduaire produisant le premier gaz contenant de l'oxygène, et
(ii) le deuxième moyen de séparation est un moyen de séparation d'un flux de gaz résiduaire en un troisième flux de gaz résiduaire et un quatrième flux de gaz résiduaire, le troisième flux de gaz résiduaire ayant une pression égale ou supérieure à P1 et allant jusqu'à P2 et étant en communication fluidique avec l'air comprimé et le premier gaz riche en oxygène, et le mélange du troisième gaz résiduaire, de l'air comprimé et du premier gaz riche en oxygène produisant le deuxième gaz contenant de l'oxygène, le deuxième gaz contenant de l'oxygène étant introduit en aval du convertisseur d'ammoniac et en amont du compresseur de gaz $NO_x$ ;
ou
le deuxième moyen de séparation est un moyen de séparation d'un flux de gaz résiduaire en un troisième flux de gaz résiduaire et un quatrième flux de gaz, et le troisième flux de gaz résiduaire étant en communication fluidique avec l'air comprimé et le premier gaz riche en oxygène, et le mélange du troisième gaz résiduaire, de l'air comprimé et du premier gaz riche en oxygène ; et la mise sous pression du mélange du troisième gaz résiduaire, d'air comprimé et du premier gaz riche en oxygène dans un moyen de mise sous pression produisant le deuxième gaz contenant de l'oxygène à une pression supérieure à P2, le deuxième gaz contenant de l'oxygène étant introduit en aval du compresseur de gaz $NO_x$ et en amont de la tour d'absorption.

Figure 1 (prior art)

**Figure 2A**

**Figure 2B**

Figure 3A

**Figure 3B**

**EP 4 392 369 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110540178 A
- WO 2018162150 A1, Casale SA
- DE 102013004341 A
- US 6264910 B